# EUROPÄISCHE PATENTSCHRIFT

(11) **EP 2 962 559 B1**
(45) Veröffentlichungstag und Bekanntmachung des Hinweises auf die Patenterteilung: **09.03.2022**
(21) Anmeldenummer: 14175546.2
(22) Anmeldetag: 03.07.2014
(51) Int. Cl.: B60Q 1/14, B60Q 1/46, A01M 29/10, A01M 29/16

(54) **Kraftfahrzeugleuchte mit Wildunfallvermeidungslicht**
Motor vehicle lighting device emitting light for preventing accidents involving wild animals
Phare de véhicule automobile émettant une lumière pour éviter les accidents avec du gibier

(43) Veröffentlichungstag der Anmeldung: 06.01.2016
(73) Patentinhaber: odelo GmbH, 70329 Stuttgart (DE)
(72) Erfinder: Vollmer, Marco, 71332 Waiblingen (DE)
(74) Vertreter: Benninger, Johannes

(56) Entgegenhaltungen:
- EP-A1- 0 454 649
- WO-A1-2015/090556
- DE-A1-102011 102 759
- DE-A1-102011 102 760
- DE-A1-102012 107 033
- JP-A- 2010 036 835
- US-A- 5 969 593

## Beschreibung

Anspruchs 1. 2006 erzielte die Bilanz von Wildunfällen allein in Deutschland ein trauriges Rekordergebnis. 10 Tote, 2841 leicht & schwer Verletzte (Quelle: Statistik ADAC) sowie ca. 230.000 tote Wildtiere. Alles in allem eine Schadenssumme von ca. 450 Mio. €. Dabei sind nicht selten auch Motorradfahrer betroffen, diese haben oft keine Chance.

Mit Hilfe von auch Wildwarngeräte genannten Wildwarnern soll Wild von der Straße ferngehalten werden, so dass es zu weniger Unfällen mit Fahrzeugen kommt.

Wildwarner sind Vorrichtungen, die das Wild davon abhalten sollen, vor herannahenden Fahrzeugen eine Straße zu überqueren. Damit sollen Wildunfälle dort vermieden werden, wo physische Barrieren durch Wildschutzzäune problematisch oder zu teuer sind.

Bekannt sind verschiedene passive und aktive Wildwarner an der Straße und auch an und in Kraftfahrzeugen.

Wildwarner am Straßenrand können optische und/oder akustische Signale zur Abschreckung der Tiere aussenden, aber auch die olfaktorische Wahrnehmung (Geruchssinn) der Tiere ansprechen.

Aktive Wildwarner sind mit einem Lichtsensor ausgestattet, der das Scheinwerferlicht herannahender Fahrzeuge erkennt und daraufhin einen auch vom menschlichen Ohr gut hörbaren Piepston erzeugt. Durch diesen Warnton werden Wildtiere gewarnt und/oder abgeschreckt, die die Straße überqueren wollen. Manche Geräte geben zusätzlich ein blaues Blinksignal ab. Die Stromversorgung wird über eingebaute Solarzellen sichergestellt. Diese Art der Geräte wird teilweise auch unter dem Namen Akustischer Reflektor angeboten. Solche Wildwarner werden von Jagdverwaltungen, Jagdpächtern oder Straßenämtern installiert.

Eine Alternative stellen rein passive Reflexionsstreifen dar, die das Scheinwerferlicht der vorbeifahrenden Fahrzeuge in Richtung Wald oder Feld lenken. Dadurch soll eine Art Lichtzaun entstehen, der das Wild fernhält. Ganz ähnlich funktionieren auch Wildwarner, die in der Schweiz aus leeren PET-Flaschen gebastelt werden. Diese Flaschen werden mit Reflektorfolie umklebt und an kritischen Straßenabschnitten an Metallstangen neben dem Straßenrand aufgehängt, als Alternative dazu werden auch CDs benutzt.

Beispielsweise hat sich gezeigt, dass durch Reflektoren am Straßenrand, welche Licht von Fahrzeugscheinwerfern bläulich entlang einer Fahrbahn reflektieren, die Zahl von Wildunfällen verringert werden kann.

Ursache hierfür ist das von in Mitteleuropa und ähnlichen Vegetationszonen vorkommenden Wildtieren als Warnfarbe wahrgenommene blaue Licht. Die Augen von Wildtieren sind darüber hinaus in der Lage, elektromagnetische Wellen bis weit in den für das menschliche Auge nicht mehr sichtbaren UV-Bereich wahrzunehmen.

Besonders wirksam scheinen hierbei so genannte blaue Halbkreisreflektoren zu sein, die entlang des Straßenverlaufs aufgestellt sind.

Der blaue Halbkreisreflektor ist mit einer mikroprismatischen Reflexfolie ausgestattet, wie sie von reflektierenden Straßenschildern bekannt ist. Das vom Fahrzeug auf die Folie treffende Licht wird vom Wildwarnreflektor in einem Abstrahlwinkel von etwa 1,5 Grad längs des Straßenrandes zurückgeworfen wodurch ein durchgehender blauer Lichtzaun entsteht. Die gleichmäßige Rundung des Wildwarnreflektor - Trägermaterials reflektiert das Licht auch in abnehmender Intensität weiter zur Seite ohne den ganzen umliegenden Bereich unnötig auszuleuchten.

Wildtiere können nur grüne und blaue Farbtöne sehen, letztere aber bis in den UV-Bereich. Rot und orange entfallen total, diese werden nur als Grün-Abstufungen gesehen - deshalb wird bei Gesellschaftsjagden rote Warnkleidung getragen, welche für den Menschen eine intensive Signalwirkung hat, für die Wildtiere jedoch mit der Umgebung verschmilzt. Dagegen ist Blau eine regelrechte Schreckfarbe, diese wird, da Blau in der Natur und insbesondere im entlang der Erdoberfläche gerichteten Blickfeld von Wild- und allen voran Waldtieren nur selten vorkommt, vom Wild sofort als gefährlich empfunden. Daher sind die blauen Halbkreisreflektoren mit einer blauen Reflektorfolie überzogen.

Die halbrunde Form der blauen Halbkreisreflektoren ist dem Bewegungssehen der Wildtiere geschuldet. Speziell Pflanzenfresser haben zwecks eines weiten Sichtfelds zur Erkennung von Raubtieren ihre Augen beidseits des Kopfes. Sie sehen nicht besonders scharf, aber sie reagieren sehr empfindlich auf Bewegung. Die halbrunde Bauart der Halbkreisreflektoren in Kombination mit dem sich ständig ändernden Anstrahlwinkel durch die Scheinwerfer eines herannahenden Fahrzeugs simuliert für das Wild eine Bewegung.

Die Auswertung von Fragebögen aus Revieren in denen blaue Halbkreisreflektoren länger als ein Jahr montiert sind, hat einen Rückgang der nächtlichen Wildunfälle mit Rotwild um 73% ergeben («Der Untertaunus-Jäger» Ausgabe 89/2012, Seiten 9-10).

Nach allen bisher vorliegenden Erfahrungswerten ist mit einer Gewöhnung des Wildes an blaue Wildwarnreflektoren nicht zu rechnen, da einerseits die Farbe Blau dem Wild fremd bleibt und Gefahr signalisiert und andererseits stets neue Generationen an Wild heranwachsen. Eine Auswertung bei 35 Revieren, bei denen blaue Wildwarnreflektoren länger als zwei Jahre im Einsatz sind, hat ergeben, dass es zu keinem Wiederanstieg der Wildunfälle gekommen ist («Der Untertaunus-Jäger» Ausgabe 89/2012, Seiten 9-10).

Eine Anpassung des Reflektors an den Neigungswinkel des Geländes ist nach den bisherigen Erkenntnissen ebenfalls nicht erforderlich, weil in dem Moment, wo das Scheinwerferlicht auf den Reflektor scheint, dieser hell wird. Es bedarf nicht der direkten Rückstrahlung. Um die Tiere zu warnen, genügt das blaue Aufscheinen.

Wildwarner können an bekannten kritischen Wildwechseln am Straßenrand installiert werden. Zumeist werden dazu die Vorrichtungen an den schon vorhandenen Leitpfosten montiert.

In der Praxis hat sich jedoch auch gezeigt, dass das Wild beim Fehlen von Wildwarnreflektoren in einer Reihe durch diese Lücke hindurch wechselt. Daher ist es zur Vermeidung erforderlich, Wildwarnreflektoren in Wildgebieten flächendeckend entlang des Straßenverlaufs von durch Wildgebiete führenden Straßen in Reihe zu setzten und diese geschlossene Reihe von Zeit zu Zeit auf Vollständigkeit und Geschlossenheit zu kontrollieren und die fehlenden Wildwarnreflektoren zügig zu ersetzten.

Da dies mit erheblichen Kosten und ebenso erheblichem Zeitaufwand verbunden ist, sind andere Maßnahmen erstrebenswert, um Wildunfälle zu vermeiden.

Beispielsweise werden im Automobil-Zubehörhandel Pfeifen als Wildwarner angeboten, die am Fahrzeug zu montieren sind und Töne hoher Frequenzen aussenden sollen. Deren Wirkung ist jedoch sehr umstritten.

In DE 10 2004 015 281 A1 wird eine Duftstoffabgabe an Fahrzeugen vorgeschlagen, um Wildtiere in die Flucht zu schlagen. Nachteilig hieran ist deren verzögerte Freisetzung insbesondere bei spärlichem Verkehr.

Durch DE 10 2004 017 155 A1 ist bekannt, Fahrzeuge mit Einrichtungen zur kontinuierlichen oder intervallartigen Licht-Abgabe und/oder Licht-Reflexion zu versehen, welche unterschiedliche und dauernd wechselnde Muster erzeugen, um Wildtiere in die Flucht zu schlagen. Die Einrichtungen sind über das gesamte Fahrzeug verteilt angeordnet. Ein hiermit einhergehender Nachteil ist die Beeinträchtigung anderer Verkehrsteilnehmer.

Durch DE 10 2004 018 290 A1 wird eine manuelle oder automatische Schallabgabe von Fahrzeugen vorgeschlagen, um Wildtiere in die Flucht zu schlagen. Nachteilig hieran ist ebenfalls die Beeinträchtigung anderer Verkehrsteilnehmer sowie die gravierende Einflussnahme auf den Lebensraum zumindest einiger nachtaktiver Tiere, die sich beispielsweise mit der Abgabe und/oder dem Empfang von Schall im für das menschliche Ohr hörbaren oder auch nicht hörbaren Frequenzbereich in ihrer Umgebung orientieren.

Durch DE 10 2012 107 033 A1 ist ein gezieltes Anleuchten von Wild und/oder Fußgängern vermittels eines Frontscheinwerfers im für das menschliche Auge sichtbaren Wellenlängenbereich bekannt, um für den Fahrer eines Kraftfahrzeugs Tiere und Menschen deutlich erkennbar anzuleuchten, so dass dieser bei Kollisionsgefahr ein Ausweichmanöver einleiten kann. Nachteilig hieran ist, dass insbesondere in bewaldeten Gebieten Wild plötzlich vor Fahrzeuge springen kann und durch das Anstrahlen stehen bleibt, anstelle zu fliehen.

Durch autobild.de: «Nachwuchstüftler ausgezeichnet» vom 15.03.2013 ist bekannt, zur Verringerung von Wildunfällen einen Kraftfahrzeugscheinwerfer mit blauen Leuchtdioden zu versehen, die den Straßenrand blau ausleuchten (http://www.autobild.de/artikel/nachwuchstueftler-ausgezeichnet-3912983.html).

Durch DE 10 2011 102 760 A1 und durch DE 10 2011 102 759 A1 ist jeweils eine Kraftfahrzeugleuchte mit einer zur Erzeugung eines Wildunfallvermeidungslichts (WUVL) vorgesehenen Lichtquelle bekannt. Die Kraftfahrzeugleuchte strahlt Licht insbesondere einer von Wildtieren als Warnfarbe wahrgenommenen und/oder einer für das menschliche Auge nicht sichtbaren Wellenlänge in die Umgebung, zumindest jedoch entlang des Verlaufs einer Fahrbahn ab. Die Kraftfahrzeugleuchte umfasst Mittel zum umgebungsabhängigen Betrieb der mindestens einen zur Erzeugung des WUVL vorgesehenen Lichtquelle.

Durch EP 0 454 649 A1 ist eine Kraftfahrzeugleuchte mit einer zur Erzeugung eines WUVL vorgesehenen Lichtquelle bekannt. Die Kraftfahrzeugleuchte strahlt einen beträchtlichen Anteil von ultraviolettem Licht in die Umgebung, zumindest jedoch entlang des Verlaufs einer Fahrbahn ab. Dabei handelt es sich um Licht insbesondere einer von Wildtieren als Warnfarbe wahrgenommenen und/oder einer für das menschliche Auge nicht sichtbaren Wellenlänge. Die Kraftfahrzeugleuchte umfasst Mittel zum umgebungsabhängigen Betrieb der mindestens einen zur Erzeugung des WUVL vorgesehenen Lichtquelle, wobei das WUVL nur bei Außerortsgeschwindigkeiten erzeugt wird.

Durch WO 2015/090556 A1 ist eine Kraftfahrzeugleuchte bekannt. Deren Lichtquellen erzeugen ultraviolettes Licht, welches mittels eines Konverters, wie beispielsweise Phosphor oder einer Phosphorverbindung in weißes Licht umgewandelt und in die Umgebung abgestrahlt wird.

Eine Aufgabe der Erfindung ist es, eine Kraftfahrzeugleuchte zu entwickeln, welche die Verkehrssicherheit durch eine Verringerung von Wildunfällen nachhaltig erhöht und von der eine geringstmögliche Schädigung und/oder Beeinträchtigung von Menschen ausgeht.

Die Aufgabe wird gelöst mit den Merkmalen des unabhängigen Anspruchs. Vorteilhafte Ausführungsformen sind in den abhängigen Ansprüchen, den Zeichnungen sowie in der nachfolgenden Beschreibung, einschließlich der zu den Zeichnungen zugehörigen Figurenbeschreibung, wiedergegeben.

Die Erfindung betrifft demnach eine Kraftfahrzeugleuchte mit mindestens einer zur Erzeugung eines Wildunfallvermeidungslichts (WUVL) vorgesehenen Lichtquelle, welche Licht einer insbesondere von Wildtieren als Warnfarbe wahrgenommenen und/oder für das menschliche Auge nicht sichtbaren Wellenlänge blauer und/oder ultavioletter Lichtfarbe in die Umgebung, zumindest jedoch entlang des Verlaufs einer Fahrbahn abstrahlt.

Die Kraftfahrzeugleuchte kann mindestens ein zur Erfüllung wenigstens einer weiteren Lichtfunktion der Kraftfahrzeugleuchte vorgesehenes, mindestens eine Lichtquelle umfassendes Leuchtmittel umfassen.

Jede Kraftfahrzeugleuchte erfüllt je nach Ausgestaltung eine oder mehrere Aufgaben beziehungsweise Funktionen. Zur Erfüllung jeder Aufgabe beziehungsweise Funktion ist mindestens eine Lichtfunktion der Kraftfahrzeugleuchte vorgesehen.

Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Nacht und/oder Tag, wie etwa bei einer Ausgestaltung als eine Heckleuchte oder als eine Tagfahrleuchte.

Beispiele für Kraftfahrzeugleuchten sind am Fahrzeugbug, an den Fahrzeugflanken und/oder an den Seitenspiegeln sowie am Fahrzeugheck angeordnete Blinkleuchten, Ausstiegsleuchten, beispielsweise zur Umfeldbeleuchtung, Begrenzungsleuchten, Bremsleuchten, Nebelleuchten, Rückfahrleuchten, sowie typischerweise hoch gesetzte dritte Bremsleuchten, so genannte Central, High-Mounted Braking Lights, Tagfahrleuchten, Scheinwerfer und auch als Abbiege- oder Kurvenlicht verwendete Nebelscheinwerfer, sowie Kombinationen hiervon.

Eine solche Kombination ist beispielsweise regelmäßig in den bekannten Heckleuchten verwirklicht. In diesen kommen beispielsweise Wiederholblinkleuchten, Begrenzungsleuchten, Bremsleuchten, Nebelleuchten sowie Rückfahrleuchten zum Einsatz, um nur eine von vielen in Heckleuchten verwirklichten Kombinationen zu nennen. Weder erhebt diese Aufzählung Anspruch auf Vollständigkeit, noch bedeutet dies, dass in einer Heckleuchte alle genannten Leuchten kombiniert werden müssen. So können beispielsweise auch nur zwei oder drei der genannten oder auch anderer Leuchten in einem gemeinsamen Leuchtengehäuse einer Heckleuchte miteinander kombiniert sein.

Jede Lichtfunktion muss eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest. Dabei sind je nach Lichtfunktion auch Raumwinkelbereiche vorgegeben, in die kein oder nur begrenzt Licht abgestrahlt werden darf, beispielsweise um eine Blendwirkung anderer Verkehrsteilnehmer auszuschließen.

Den einzelnen Lichtfunktionen sind nicht nur zum Teil unterschiedliche Helligkeiten bzw. Sichtweiten zugeordnet, sondern zum Teil auch unterschiedliche Lichtfarben.

Dabei sind nicht nur die Lichtfarben für die einzelnen Lichtfunktionen vorgegeben, sondern darüber hinaus für jede Lichtfarbe jeder Lichtfunktion exakt Wellenlängenbereiche im Spektrum des vom menschlichen Auge wahrnehmbaren, im Folgenden als sichtbar bezeichneten Lichts vorgegeben, innerhalb welcher Wellenlängenbereiche die vorgegebenen Lichtfarben der einzelnen Lichtfunktionen jeweils liegen müssen.

Wenigstens einer Lichtquelle zumindest eines zur Erfüllung mindestens einer Lichtfunktion der Kraftfahrzeugleuchte vorgesehenen Leuchtmittels können ein oder mehrere zur Ausformung einer beispielsweise gesetzlich vorgegebenen Lichtverteilung beitragende Optikelemente zur Lichtlenkung zugeordnet sein.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln, um nur einige denkbare Optikelemente zu nennen.

Mindestens ein zur Erfüllung wenigstens einer Lichtfunktion der Kraftfahrzeugleuchte vorgesehenes Leuchtmittel kann zumindest teilweise in einem gegebenenfalls vorgesehenen, von einem Leuchtengehäuse und einer Lichtscheibe zumindest teilweise umschlossenen Leuchteninnenraum beherbergt sein.

Die Kraftfahrzeugleuchte kann eine oder mehrere anorganische Leuchtdioden und/oder eine oder mehrere organische Leuchtdioden als zumindest eine Lichtquelle aufweisen.

Anorganische Leuchtdioden und/oder organische Leuchtdioden kommen unter anderem wegen ihres geringen Stromverbrauchs, geringen Bauraumbedarfs, schnellen Ansprechverhaltens und ihrer hohen Lebensdauer zur Erfüllung einer oder mehrerer Lichtfunktionen in Kraftfahrzeugleuchten vermehrt zum Einsatz.

Anorganische Leuchtdioden bestehen aus mindestens einem Lichtemittierende-Diode-Halbleiter-Chip, kurz LED-Chip, sowie wenigstens einer beispielsweise durch Spritzgießen angeformten, den mindestens einen LED-Chip ganz oder teilweise umhüllenden Primäroptik. Auch sind Kraftfahrzeugleuchten bekannt, in denen reine LED-Chips ohne angeformte Primäroptiken zum Einsatz kommen. Im Folgenden wird deshalb der Einfachheit halber nicht zwischen Leuchtdiode und LED-Chip unterschieden und statt dessen einheitlich der Begriff LED stellvertretend für beide Ausgestaltungen verwendet, es sei denn, es ist explizit etwas anderes erwähnt. Herausragende Eigenschaften von LEDs im Vergleich zu anderen, konventionellen Lichtquellen von Leuchtmitteln sind eine wesentlich längere Lebensdauer und eine wesentlich höhere Lichtausbeute bei gleicher Leistungsaufnahme. Dadurch und unter anderem auch wegen ihrer kompakteren Abmessungen können durch Verwendung von LEDs als Lichtquelle von Leuchtmitteln besonders kompakte Kraftfahrzeugleuchten verwirklicht werden, die an fast jede nur erdenkliche Einbausituation angepasst sein können.

Eine LED umfasst neben dem bereits erwähnten mindestens einen LED-Chip auch mindestens ein Kontaktmittel zur elektrischen Kontaktierung des LED-Chips. Üblicherweise verfügt jede Leuchtdiode über einen Bonddraht je LED-Chip, welcher je einen LED-Chip elektrisch kontaktiert. Dieser Bonddraht bildet ein erstes Kontaktmittel für den LED-Chip der LED. Der Bonddraht kann mit einem ersten elektrischen Anschluss verbunden sein, welcher zur elektrischen Kontaktierung der LED beispielsweise mit einer ersten Leiterbahn eines Leuchtmittelträgers vorgesehen sein kann. Ein zweites Kontaktmittel für den LED-Chip der LED bildet der LED-Chip selbst. Zur elektrischen Kontaktierung kann der LED-Chip mit einem zweiten elektrischen Anschluss verbunden sein, welcher zur elektrischen Kontaktierung der LED beispielsweise mit einer zweiten Leiterbahn eines Leuchtmittelträgers vorgesehen sein kann.

Die LED kann darüber hinaus einen den LED-Chip unmittelbar umgebenden Primärreflektor aufweisen. Dieser Primärreflektor kann beispielsweise durch Wandungen einer den LED-Chip umgebenden Ausnehmung und/oder durch einen Napf gebildet sein, in dem der LED-Chip angeordnet ist. Der Napf kann mit dem erwähnten zweiten Anschluss verbunden sein, diesen bilden oder umfassen oder von diesem umfasst werden.

Bei speziellen Ausführungen von LEDs können einzelne oder alle Kontaktmittel selbst die elektrischen Anschlüsse bilden, wie nachfolgend zu den verschiedenen Kontaktierungsmöglichkeiten von LEDs ausgeführt.

Bekannt sind LEDs zur Durchsteckmontage (THT; Through Hole Technology), oberflächenmontierbare (SMD; Surface Mounted Device) LEDs und LEDs, bei denen der LED-Chip in Nacktmontagetechnik (COB; Chip On Board) direkt auf den Leuchtmittelträger gebondet wird.

THT-LEDs sind ein gängig bekannter Typ LEDs. Sie werden auch als bedrahtete LEDs bezeichnet, da sie aus einer zumindest in einer gewünschten Abstrahlrichtung transparenten Kapselung, z.B. in Form einer Umspritzung oder eines Vergusses bestehen, welche einen den LED-Chip mit einem ersten elektrischen Anschluss, beispielsweise in Form eines Anodenanschlusses verbindenden Bonddraht und den mit einem zweiten elektrischen Anschluss, beispielsweise in Form eines Kathodenanschlusses, verbundenen LED-Chip einschließt. Aus der Kapselung ragen nur die auch als Beinchen bezeichneten Drähte des ersten elektrischen Anschlusses und des zweiten elektrischen Anschlusses als die Anoden- und Kathodenanschlüsse der THT-LED. Der beispielsweise als Kathodenanschluss ausgeführte zweite elektrische Anschluss kann hierbei mit einem oben erwähnten Napf versehen sein, in dem der LED-Chip angeordnet ist. Der Bonddraht führt vom beispielsweise als Anodenanschluss ausgeführten ersten Anschluss von außerhalb des Napfs kommend zum LED-Chip.

SMD-LEDs sind ein weiterer bekannter Typ LEDs. SMD-LEDs bestehen aus einem Leadframe mit wenigstens einer Bestückungsfläche für mindestens einen LED-Chip sowie elektrischen Anschlussflächen. Das Leadframe ist von einem Kunststoffkörper mit zumindest einer die wenigstens eine Bestückungsfläche freihaltenden Ausnehmung teilweise umspritzt. Die elektrischen Anschlussflächen des Leadframes sind hierbei als die elektrischen Anschlüsse der SMD-LED zur späteren Oberflächenmontage ebenfalls freigehalten. Der mindestens eine LED-Chip ist am Grund der zumindest einen zur wenigstens einen Bestückungsfläche reichenden Ausnehmung angeordnet und elektrisch kontaktiert. Dabei ist der LED-Chip auf einer mit wenigstens einer ersten elektrischen Anschlussfläche verbundenen ersten Partie des Leadframes angeordnet. Ein Bonddraht verbindet den LED-Chip mit einer zweiten Partie des Leadframes, die wiederum mit wenigstens einer zweiten elektrischen Anschlussfläche verbunden ist. Die an ihrem Grund zur Bestückungsfläche reichende Ausnehmung kann reflektorartig ausgestaltet sein. Dabei bilden die Wandungen der Ausnehmung den oben erwähnten Primärreflektor. Hierbei können die Wandungen reflektierend beschichtet sein.

COB-LEDs bestehen aus einem direkt auf einem Leuchtmittelträger anzuordnenden, ungehäusten LED-Chip und einem Bonddraht. Die Rückseite des LED-Chips bildet dabei den ersten elektrischen Anschluss der COB-LED. Zur elektrischen Kontaktierung wird der LED-Chip auf seiner Rückseite direkt mit einer ersten Leiterbahn eines Leuchtmittelträgers z.B. durch Löten oder Schweißen elektrisch verbunden. Der den zweiten elektrischen Anschluss der COB-LED bildende Bonddraht wird mit einer zweiten Leiterbahn des Leuchtmittelträgers ebenfalls z.B. durch Löten oder Schweißen elektrisch verbunden.

Der Vollständigkeit halber sei ergänzend erwähnt, dass auch andere Kontaktierungen wie z.B. der so genannte Flip-Chip-Aufbau möglich sind, bei dem die Kontaktmittel des LED-Chips direkt mit einem kontaktierten Substrat verbunden sind. In diesen Fällen wird kein Bonddraht verwendet

Bei einer organischen Leuchtdiode, kurz OLED (von Organic Light Emitting Diode; OLED) handelt es sich um ein leuchtendes Dünnschichtbauelement aus organischen halbleitenden Materialien mit mindestens einer Emitterschicht, das sich von den anorganischen LEDs dadurch unterscheidet, dass keine einkristallinen Materialien erforderlich sind. Im Vergleich zu anorganischen LEDs lassen sich organische Leuchtdioden daher in kostengünstiger Dünnschichttechnik herstellen. OLEDs ermöglichen dadurch die Herstellung flächiger Lichtquellen, die einerseits sehr dünn und andererseits als durch die Lichtscheibe einer Kraftfahrzeugleuchte hindurch sichtbare leuchtende Fläche eingesetzt einen besonders homogenes Erscheinungsbild aufweisen.

Anders als Glühlampen oder Gasentladungslampen sind LEDs und OLEDs keine Wärmestrahler. Sie emittieren Licht in einem begrenzten, von den verwendeten Materialien und/oder deren Eigenschaften, wie beispielsweise deren Dotierung abhängigen Spektralbereich, das Licht ist nahezu monochromatisch. Deshalb sind sie beim Einsatz als Lichtquelle für Lichtfunktionen in Kraftfahrzeugleuchten besonders effizient im Vergleich zu anderen Lichtquellen, bei denen zur Erzielung einer quasi monochromen Farbcharakteristik Farbfilter den größten Teil des Spektrums absorbieren müssen.

Bei der mindestens einen zur Erzeugung des WUVL vorgesehenen Lichtquelle handelt es sich bevorzugt um wenigstens eine LED und/oder zumindest eine Emitterschicht einer oder mehrerer OLEDs

Die blaues und/oder ultraviolettes Licht abstrahlende, zur Erzeugung des WUVL vorgesehene Lichtquelle kann Teil eines zur Erfüllung einer weiteren Lichtfunktion der Kraftfahrzeugleuchte vorgesehenen Leuchtmittels sein.

Ein solches Leuchtmittel weist demnach mindestens zwei Lichtquellen unterschiedlicher Lichtquellenfarben auf, mindestens eine erste Lichtquelle einer ersten Lichtquellenfarbe zur Erfüllung der weiteren Lichtfunktion der Kraftfahrzeugleuchte, sowie mindestens eine zweite Lichtquelle, welche Licht zur Erzeugung des WUVL abstrahlt.

Die Licht unterschiedlicher Lichtquellenfarben abstrahlenden Lichtquellen zumindest eines wenigstens zwei Licht unterschiedlicher Lichtquellenfarben abstrahlende Lichtquellen umfassenden Leuchtmittels können vorzugsweise unabhängig voneinander betrieben werden.

Hierdurch kann ein wenigstens zwei Licht unterschiedlicher Lichtquellenfarben abstrahlende Lichtquellen umfassendes Leuchtmittel durch Betrieb seiner Lichtquellen sämtlicher Lichtquellenfarben sowohl eine Lichtfunktion der Kraftfahrzeugleuchte erfüllen, als auch ein WUVL erzeugen, sowie durch Betrieb nur seiner Lichtquellen einer Lichtquellenfarbe entweder eine Lichtfunktion der Kraftfahrzeugleuchte erfüllen, oder ein WUVL erzeugen.

Besonders bevorzugt handelt es sich zumindest bei den unterschiedliche Lichtquellenfarben abstrahlenden Lichtquellen um LEDs und/oder Emitterschichten einer oder mehrerer OLEDs.

Zusätzlich zu den erwähnten Vorteilen von LEDs und OLEDs ergibt sich durch deren Verwendung als Lichtquelle für das WUVL eine Lebensdauer der Lichtquellen über die gesamte Fahrzeuglebensdauer.

Alternativ oder zusätzlich können mindestens einer zur Erzeugung des WUVL vorgesehenen Lichtquelle ein oder mehrere zur Ausformung einer beispielsweise einer zum Schutz anderer Verkehrsteilnehmer vorgesehenen, ausgeprägten Hell-Dunkel-Grenze beitragende Optikelemente zur Lichtlenkung zugeordnet sein.

Bei den erwähnten Optikelementen kann es sich um wenigstens einen Reflektor und/oder um mindestens eine Linse und/oder um eine oder mehrere im Strahlengang zwischen wenigstens einer Lichtquelle des Leuchtmittels und der Lichtscheibe angeordnete Optikscheiben oder dergleichen handeln, um nur einige denkbare Optikelemente zu nennen.

Beispielsweise kann in einem gegebenenfalls vorgesehenen Leuchteninnenraum mindestens ein wenigstens einer Lichtquelle zumindest eines Leuchtmittels zugeordneter Reflektor untergebracht sein. Der Reflektor kann zumindest zum Teil durch ein separates Bauteil und/oder durch wenigstens einen Teil eines Leuchtengehäuses gebildet sein, beispielsweise vermittels einer zumindest teilweisen, reflektierenden Beschichtung.

Darüber hinaus können Walzen- Kissen- oder andersartige Optiken in der Lichtscheibe und/oder einer zwischen mindestens einem Leuchtmittel bzw. dessen Lichtquellen und der Lichtscheibe angeordneten Optikscheibe vorgesehen sein, um einer gewünschten Lichtverteilung für eine vorgegebene Lichtfunktion beizutragen.

Die Lichtscheibe selbst kann alternativ oder zusätzlich als ein Optikelement ausgebildet sein, beispielsweise indem sie vorzugsweise an deren mindestens einem Leuchtmittel zugewandter Innenseite mit einer zur Erzeugung einer oder mehrerer beispielsweise gesetzlich vorgegebener Lichtverteilungen beitragenden optischen Struktur versehen ist. Hierdurch kann gegebenenfalls auf eine Optikscheibe verzichtet werden.

Eine scharfe Hell-Dunkel-Grenze in Verbindung mit einer zusätzlichen Lichtfunktion kann beispielsweise durch unterschiedliche Einstrahlung von zur Erfüllung einer Lichtfunktion der Kraftfahrzeugleuchte vorgesehenen Lichtquellen und der zur Erzeugung des WUVL vorgesehenen Lichtquellen in einen Reflektor verwirklicht sein, ähnlich wie dies beispielsweise bei Frontscheinwerfern mit Abblend- und Fernlichtfunktion verwirklicht ist, oder wie dies beispielsweise wie in DE 10 2010 009 640 A1 beschrieben für eine Kombination von Tagfahr- und Nebelscheinwerferlichtfunktion vorgesehen sein kann, bevorzugt jedoch mit dem Unterschied, dass die Hell-Dunkel-Grenze des WUVL zumindest nicht oberhalb der Hell-Dunkel-Grenze der Lichtfunktion liegt, sondern bevorzugt darunter, um die Beeinträchtigung anderer Verkehrsteilnehmer gering zu halten.

Beispielsweise kann hierbei vorgesehen sein, dass das WUVL hinsichtlich einer Hell-Dunkel-Grenze Abblendlichtfunktionseigenschaften aufweist, um entgegenkommende Verkehrsteilnehmer nicht zu blenden, wohingegen mit den jwls. neben anliegenden Lichtquellen eine Wiederholblinklichtfunktion verwirklicht sein kann, die eine Lichtverteilung auch oberhalb der Hell-Dunkel-Grenze hat.

Mindestens einer Lichtquelle der Kraftfahrzeugleuchte kann ein Lichtleiterelement zugeordnet sein.

Ein Lichtleiterelement weist mindestens eine Lichteinkoppelfläche sowie mindestens eine von der Lichteinkoppelfläche verschiedene Lichtaustrittsfläche auf. An der mindestens einen Lichteinkoppelfläche wird Licht mindestens einer Lichtquelle in das Lichtleiterelement eingekoppelt und an der mindestens einen von der Lichteinkoppelfläche verschiedenen Lichtaustrittsfläche wird das Licht wieder aus dem Lichtleiterelement ausgekoppelt.

Das Lichtleiterelement kann darüber hinaus mindestens eine wenigstens einer Lichtaustrittsfläche zugeordnete, von dieser zugeordneten Lichtaustrittsfläche verschiedene, beispielsweise auf einer Lichtleiterrückseite gegenüber der Lichtaustrittsfläche angeordnete Lichtumlenkfläche aufweisen.

Denkbar ist eine Ausführung als farbmischendes Lichtleiterelement, in welches sowohl Licht mindestens einer zur Erfüllung einer Lichtfunktion der Kraftfahrzeugleuchte vorgesehenen Lichtquelle, als auch das Licht mindestens einer ein WUVL erzeugenden Lichtquelle eingekoppelt wird.

Das Licht der unterschiedlichen Lichtquellen kann im selben Abstrahlbereich aus dem Lichtleiterelement ausgekoppelt werden, oder in unterschiedlichen Abstrahlbereichen für das WUVL und die Lichtfunktion.

Ein gegebenenfalls vorgesehenes Lichtleiterelement kann Teil eines eine oder mehrere Licht gleicher oder unterschiedlicher Lichtfarbe abstrahlender Lichtquellen umfassenden, beispielsweise in einem gegebenenfalls vorgesehenen Leuchteninnenraum zumindest teilweise beherbergten Leuchtmittels sein, oder als separates Bauteil der Kraftfahrzeugleuchte ausgebildet sein, beispielsweise indem das Lichtleiterelement als separates Bauteil in einem gegebenenfalls vorgesehenen Leuchteninnenraum untergebracht ist.

Ein Lichtleiterelement erlaubt ein vollständiges Verbergen der ihr Licht in das Lichtleiterelement einstrahlenden Lichtquellen beim Blick auf die Kraftfahrzeugleuchte. Lichtleiterelemente leiten das von einer verborgen angeordneten Lichtquelle in sie eingekoppelte Licht und koppeln es entfernt von der Einkopplung wieder aus. Das ausgekoppelte Licht kann dabei direkt, ohne einen Reflektor in der gewünschten Richtung abgestrahlt werden, oder indirekt, indem es in einen Reflektor eingestrahlt wird, der es dann in die gewünschte Richtung reflektiert. Auch Kombinationen aus direkter und indirekter Abstrahlung sind möglich, wobei das Lichtleiterelement hinter der Lichtscheibe sowie gegebenenfalls einer Optikscheibe von außerhalb des Leuchteninnenraums aus sichtbar angeordnet ist und zusätzlich ein hinter dem Lichtleiterelement angeordneter Reflektor vorgesehen ist.

Lichtleiterelemente werden zunehmend anstelle von oder zusätzlich zu einem oder mehreren der erwähnten Optikelemente in Kraftfahrzeugleuchten eingesetzt, beispielsweise gerade weil diese eine für einen Betrachter verborgene Anordnung der Lichtquelle ermöglichen.

Dem Lichtleiterelement kann mindestens ein Optikelement, wie etwa ein Reflektor und/oder eine Optikscheibe und/oder ein Rinnenkonzentrator zugeordnet sein, um nur einige mögliche Optikelemente aufzuzählen.

Das Lichtleiterelement kann beispielsweise stabförmig als so genanntes Stablichtleiterelement und/oder flächig als so genanntes Flächenlichtleiterelement ausgebildet sein, mit einer oder mehreren, auf seiner beispielsweise in Richtung einer Hauptabstrahlrichtung orientierten Vorderseite angeordneten Lichtaustrittsflächen.

Ein gegebenenfalls vorgesehenes Leuchtengehäuse bzw. der gegebenenfalls vorgesehene Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Die Erzeugung des WUVL ist gesteuert von Fahrzuständen, z.B. bei Geschwindigkeiten, wie sie überwiegend entlang von Fahrbahnabschnitten ohne Gefährdung von Fußgängern vorkommen. Hierdurch wird Innerorts eine Abstrahlung ultravioletten Lichts vermieden und dadurch die Beeinträchtigung anderer Verkehrsteilnehmer nochmals gesenkt.

Die Mittel zum fahrzustands- und bevorzugt umgebungsabhängigen Betrieb der mindestens einen zur Erzeugung des WUVL vorgesehenen Lichtquelle umfassen hierzu mindestens eine Schnittstelle und/oder einen Sensor zur Erfassung von Fahrzuständen, die zusätzlich zur Fahrgeschwindigkeit beispielsweise durch Beschleunigung und/oder Gaspedalstellung und/oder Bremspedalbetätigung und/oder Bremspedalbetätigungsgeschwindigkeit und/oder Seitenbeschleunigung, um nur einige denkbare Größen zu nennen, ermittelt werden können.

Das WUVL wird hierdurch nur bei Außerortsgeschwindigkeiten erzeugt.

Ein geschwindigkeitsadaptiertes WUVL, das erst bei Außerortsgeschwindigkeiten aktiviert wird, beugt Schädigungen der Augen vor allem bei Kindern vor, die auf Höhe des WUVL stehen und nicht merken, dass sie von UV-Licht bestrahlt werden.

Darüber hinaus kann die Erzeugung des WUVL abhängig von Umgebungszuständen gesteuert sein, vorzugsweise abhängig von den herrschenden Lichtverhältnissen, beispielsweise um zwischen Tag- und Nachtfahrten unterscheiden zu können.

Die Mittel zum fahrzustands- und bevorzugt umgebungsabhängigen Betrieb der mindestens einen zur Erzeugung des WUVL vorgesehenen Lichtquelle umfassen hierzu mindestens eine Schnittstelle und/oder einen Sensor zur Erfassung von Umgebungszuständen, wie beispielsweise Umgebungshelligkeit und/oder Sichtweite und/oder Niederschlag, um nur einige denkbare Größen zu nennen, anhand denen ein Umgebungszustand ermittelt werden kann.

Beispielsweise kann das WUVL hierdurch nur bei Dämmerung und/oder Dunkelheit erzeugt werden.

Durch eine Kombination eines umgebungs- und fahrzustandsabhängigen Betriebs der mindestens einen zur Erzeugung des WUVL vorgesehenen Lichtquelle kann beispielsweise bei einer mit einer hohen Bremspedalbetätigungsgeschwindigkeit einhergehenden plötzlichen Bremspedalbetätigung das WUVL zumindest kurzzeitig durch Einschalten der hierfür vorgesehenen mindestens einen Lichtquelle erzeugt werden, um bei einer möglichen Ursache der plötzlichen Bremspedalbetätigung durch Wildtiere diese zu versuchen in die Flucht zu schlagen, um Wildunfälle zu vermeiden.

Alternativ oder zusätzlich kann das WUFL auch beispielsweise in Abhängigkeit des Datums tageszeitgesteuert und/oder vom Aufenthaltsort eines hiermit ausgestatteten Kraftfahrzeugs abhängig sein, um nur einige denkbare weitere Ausgestaltungsmöglichkeiten aufzulisten. Der Aufenthaltsort kann beispielsweise über mindestens eine Schnittstelle und/oder einen Sensor zur Erfassung von zum Empfang von Signalen eines auch als Global Navigation Satellite System, kurz GNSS, bezeichneten, bestehenden und/oder künftigen globalen Navigationssatellitensystems, wie beispielsweise:
- GPS (Global Positioning System) der Vereinigten Staaten von Amerika, und/oder
- GLONASS (GLObal NAvigation Satellite System) der Russischen Föderation, und/oder
- Galileo der Europäischen Union, und/oder
- Beidou der Volksrepublik China
vorgesehen sein.

Beispiele für mindestens eine Schnittstelle und/oder mindestens einen Sensor zum Empfang von Signalen eines GNSS ergeben sich beispielsweise anhand von GPS-Daten von in Kraftfahrzeugen verbauten Navigationssystemen. Hierdurch ist denkbar, das WUFL nur an solchen Orten und/oder zu Zeiten anzuschalten, an denen Wildaufkommen zu vermuten und/oder mit Wildaufkommen zu rechnen ist.

Die Kraftfahrzeugleuchte kann allein zur Erfüllung des WUVL ausgebildet sein.

Beispielsweise kann die Kraftfahrzeugleuchte als eine zum Einbau im Dachbereich eines Kraftfahrzeugs vorgesehene Wildunfallvermeidungsleuchte ausgebildet sein. Beispielsweise kann eine solche Wildunfallvermeidungsleuchte zum Einbau im Bereich der A-Säule oder beispielsweise an der in Fahrtrichtung vorne liegenden Seite einer auf dem Dach eines Kraftfahrzeugs angeordneten Dachreling vorgesehen sein.

Die Anordnung im Bereich der A-Säule oder einer Dachreling birgt den Vorteil einer möglichst hohen Anordnung, um trotz gegebenenfalls scharfer Hell-Dunkel-Grenze möglichst weit und vorausschauend Wild abzuschrecken.

Alternativ kann die Kraftfahrzeugleuchte zur Erfüllung des WUVL in Kombination mit einer oder mehreren von einer Kraftfahrzeugleuchte zu erfüllenden Lichtfunktionen ausgebildet sein.

Eine Kombination des WUVL mit anderen Lichtfunktionen weist den Vorteil auf, dass kein zusätzlicher Platzbedarf am Fahrzeug besteht.

Die Kraftfahrzeugleuchte kann als beispielsweise an den Fahrzeugflanken und/oder am Fahrzeugbug und/oder an den Außenrückblickspiegeln eines Kraftfahrzeugs vorgesehene Wiederholblinkleuchte ausgebildet sein.

Beispielsweise kann die Kraftfahrzeugleuchte als eine am Fahrzeugbug eines Kraftfahrzeugs anzuordnende Tagfahrleuchte und/oder als ein Abblendlichtscheinwerfer und/oder als Nebelscheinwerfer und/oder als eine beispielsweise in einen Nebelscheinwerfer integrierte bzw. durch einen Nebelscheinwerfer erfüllte Abbiegeleuchte ausgebildet sein, welche mindestens eine Lichtquelle zur Erzeugung des WUVL umfasst, sowie Mittel zum fahrzustands- und bevorzugt umgebungsabhängigen Betrieb der mindestens einen zur Erzeugung des WUVL vorgesehenen Lichtquelle, und welche mindestens eine zur Erfüllung einer Abblendlichtfunktion und/oder einer Tagfahrlichtfunktion und/oder einer Nebelscheinwerferlichtfunktion vorgesehene Lichtquelle umfasst.

Das WUVL kann in diesem Fall den selben Abstrahlbereich wie beispielsweise eine Abblendlichtfunktion und/oder einer Tagfahrlichtfunktion und/oder einer Nebelscheinwerferlichtfunktion und/oder einer Abbiegelichtfunktion, oder nur einen Teilabstrahlbereich, beispielsweise einen begrenzten Winkel ausgehend von der Fahrtrichtung nach außen aufweisen.

Beispielsweise ist denkbar, das WUFL beispielsweise mit einem durch DE 10 2012 107 033 A1 bekannten gezielten Anleuchten von Wild und/oder Fußgängern vermittels eines Frontscheinwerfers im für das menschliche Auge sichtbaren Wellenlängenbereich zu kombinieren, um für den Fahrer eines Kraftfahrzeugs Tiere und Menschen deutlich erkennbar anzuleuchten, so dass dieser bei Kollisionsgefahr ein Ausweichmanöver einleiten kann, wobei das Wild trotz Anleuchten mit dem Scheinwerferlicht mit dem WUFL abgeschreckt wird.

Besonders bevorzugt ist die Kraftfahrzeugleuchte als eine an den Fahrzeugflanken und/oder an und/oder in einem Außenrückblickspiegel anzuordnende Begrenzungsleuchte und/oder als eine Wiederholblinkleuchte ausgebildet, welche mindestens eine Lichtquelle zur Erzeugung des WUVL umfasst, sowie Mittel zum fahrzustands- und bevorzugt umgebungsabhängigen Betrieb der mindestens einen zur Erzeugung des WUVL vorgesehenen Lichtquelle, und welche mindestens eine zur Erfüllung einer Begrenzungslichtfunktion und/oder einer einer Fahrtrichtungsanzeige dienenden Wiederholblinklichtfunktion vorgesehene Lichtquelle umfasst.

Das WUVL kann in diesem Fall den selben Abstrahlbereich wie beispielsweise eine Wiederholblinklichtfunktion und/oder eine Begrenzungslichtfunktion, oder nur einen Teilabstrahlbereich, beispielsweise in Fahrtrichtung und einem begrenzten Winkel nach außen kleiner als beispielsweise 45° in Bezug auf die Fahrtrichtung aufweisen.

Eine Kombination des WUVL mit einer nach vorne gerichteten Lichtfunktion ermöglichen einen optimalen Abstrahlbereich des WUVL.

Wichtig ist hervorzuheben, dass WUVL auch in eine als Heckleuchte ausgebildete Kraftfahrzeugleuchte integriert sein kann, wobei die Kraftfahrzeugleuchte beispielsweise mit einem Umlenkprisma versehen sein kann, welches das WUVL an der mit einer Fahrzeugflanke eines hiermit ausgestatteten Kraftfahrzeugs beispielsweise bündigen Außenflanke der Heckleuchte nach vorne in Fahrtrichtung des Kraftfahrzeugs ablenkt und in den gewünschten Zielbereich lenkt. Dieser Zielbereich liegt in Richtung Front/Seite.

Die Kraftfahrzeugleuchte umfasst Mittel zum gepulsten Betrieb des WUVL.

Die Mittel zum gepulsten Betrieb des WUVL können zumindest zum Teil von den Mitteln zum umgebungs- und/oder fahrzustandsabhängigen Betrieb der mindestens einen zur Erzeugung des WUVL vorgesehenen Lichtquelle umfasst sein, oder diese wenigstens teilweise umfassen. Dies ermöglicht eine sensorische Erfassung der Umgebungsbedingungen und Anpassung des WUVL beispielsweise hinsichtlich Lichtstärke, Abstrahlrichtung, Pulsen, Farbe, um nur einige denkbare Ausgestaltungen zu nennen. Hinsichtlich der Abstrahlrichtung kann beispielsweise in Verbindung mit einer Fahrspurerkennung und/oder einer Fahrbahnranderkennung das WUVL nur an derjenigen Seite aktiviert werden, an denen ein Straßenrand besteht, oder wenn beispielsweise auf schmalen Nebenstrecken gar keine Fahrspurmarkierungen vorhanden sind, das WUVL beidseitig aktiviert werden.

Denkbar ist in diesem Zusammenhang auch, dass das WUVL mit einer zur Umgebungs-, wie beispielsweise Fahrbahnverlaufserkennung, dienenden Infrarot-Ausleuchtung eines Fahrassistenzsystems kombiniert werden kann.

Einer Gewöhnung des Wildes an die Lichtblitze wird, im Gegensatz zu einer gleichmäßigen Abstrahlung, durch ständig variierende Intensität entgegen gewirkt. Ein Überqueren der Straße beim Herannahen von Kraftfahrzeugen wird so weitgehend verhindert.

Beim Pulsen der Lichtquellen für das WUVL können diese auch einer anderen Lichtfunktion überlagert werden, die beispielsweise in der gleichen Kammer einer Kraftfahrzeugleuchte verbaut sind.

Der Betrachter nimmt das Pulsen bevorzugt nicht wahr, beispielsweise durch eine Kombination mit einem hellen Scheinwerfer, dem noch ein heller Puls in eine bestimmten Abstrahlrichtung überlagert wird. Durch ein im UV-Bereich abstrahlendes WUVL wird die Wahrnehmung durch Menschen ausgeschlossen.

Auch bei Abstrahlung des WUVL im Bereich des sichtbaren Lichts fällt dem Betrachter bei geringer Pulsbreite und/oder ausreichendem Pulsabstand die Überlagerung nicht auf.

Ausschlaggebend ist hierfür voraus, die zeitliche Auflösung des menschlichen Auges für Lichtpulse im Vergleich zu der zeitlichen Auflösung für Lichtpulsen von Wild.

Das Pulsen des WUVL erfolgt geschwindigkeitsabhängig.

Bei Fahrzeuggeschwindigkeit von 100 km/h ≈ 27,78 m/s würde ein Puls von 3 Hz alle ca. 10 m blitzen. Dies ist immer noch deutlich kürzer als ein Abstand von an den Leitpfosten angeordneten Wildwarnern von ca. 50 m.

Durch eine Aktivierung des WUVL erst oberhalb einer Mindestgeschwindigkeit in Verbindung mit einem geschwindigkeitsadaptierten Pulsen werden andere Verkehrsteilnehmer nur geringfügig und kurz beispielsweise mit UV-Licht des WUVL bestrahlt.

Das WUVL kann mit einem akustischen Wildwarner kombiniert sein.

Grundsätzlich ist denkbar, einen Optikkörper einer LED so auszulegen, dass dieser die gewünschte Abstrahlcharkteristik eines WUVL erfüllt und so modular in Funktionskammern eingesetzt werden kann. Hierdurch wird ein Anbau- und Nachrüstteil geschaffen, mit dem auch bestehende Fahrzeuge nachgerüstet werden können, um bei diesen die Gefahr von Wildunfällen zu bannen oder zumindest zu verringern.

Es ist ersichtlich, dass die Erfindung durch eine Kraftfahrzeugleuchte mit einer sensorgestützten Wildunfallvermeidungslichtfunktion (WUVL) verwirklicht sein kann, welche abhängig von der Eigengeschwindigkeit eines mit einer solchen Kraftfahrzeugleuchte ausgestatteten Kraftfahrzeugs und/oder der Umgebungshelligkeit dauerhaft oder beispielsweise pulsweitenmoduliert und/oder in Kombination mit Lichtpulsen aktiv ist.

Dabei kann eine scharfe Hell-Dunkel-Grenze einer Blau- oder UV-Licht abstrahlenden Lichtquelle zur Vermeidung von Wildunfällen vorgesehen sein, um andere Verkehrsteilnehmer möglichst wenig oder nicht zu beeinträchtigen.

Vorteile der Erfindung ergeben sich durch eine Verbesserung der Verkehrssicherheit durch eine Verringerung von Wildunfällen.

Zusätzliche Vorteile gegenüber dem Stand der Technik sind unter anderem, dass Wildunfälle durch ein aktives WUVL am Fahrzeug minimiert werden können. Im Fahrzeug ist zumindest während des Fahrbetriebs eine Spannungs- und Stromversorgung immer gewährleistet. Es werden im Vergleich zu entlang des Straßenrands aufgestellten aktiven Wildwarnern keine Solarzellen benötigt, die auf Tageslicht angewiesen sind.

Weitere Vorteile gegenüber dem Stand der Technik ergeben sich dadurch, dass Wildwarner, unabhängig davon, ob es sich um aktive Geräte oder passive Reflektoren handelt, zur Aktivierung das Scheinwerferlicht vorbeifahrender Fahrzeuge benötigen. Sie funktionieren daher nur richtig bei Dämmerung oder Nacht. Gerade bei gefährlichen Straßenführungen wie starken Kurven, Mulden oder Kuppen kann das Scheinwerferlicht die Wildwarner deutlich später erreichen und damit die Vorwarnzeit reduzieren. Aufgewirbelter Straßenschmutz oder Taumittel können die Reflektoren oder Sensoren verschmutzen und so die Wirkung zusätzlich beeinträchtigen. Außerdem können Wildwarner durch Unfälle oder Vandalismus beschädigt werden oder ausfallen. Die einwandfreie Funktion der Wildwarner muss daher immer wieder kontrolliert werden.

Eine in Kraftfahrzeugleuchten installierte spezielle Lichtquelle zur Erzeugung eines WUVL kann diese Nachteile weitgehend beseitigen.

Die Erfindung wird nachfolgend anhand von in den Zeichnungen dargestellter Ausführungsbeispiele näher erläutert. Darin bezeichnen gleiche Bezugszeichen gleiche oder gleich wirkende Elemente. Der Übersicht halber sind nur Bezugszeichen in den einzelnen Zeichnungen dargestellt, die für die Beschreibung der jeweiligen Zeichnung erforderlich sind. Die Größenverhältnisse der einzelnen Elemente zueinander entsprechen dabei nicht immer den realen Größenverhältnissen, da einige Formen vereinfacht und andere Formen zur besseren Veranschaulichung vergrößert im Verhältnis zu anderen Elementen dargestellt sind. Es zeigen in schematischer Darstellung:
- Fig. 1: ein Kraftfahrzeug mit einer im Dachbereich der A-Säule montierten, ein Wildunfallvermeidungslicht (WUVL) erzeugenden Kraftfahrzeugleuchte in einer Seitenansicht.
- Fig. 2: ein Kraftfahrzeug mit einer im Bereich der Außenrückblickspiegel montierten, ein Wildunfallvermeidungslicht (WUVL) erzeugenden Kraftfahrzeugleuchte in einer Draufsicht.
- Fig. 3: eine Kraftfahrzeugleuchte mit zwei Licht unterschiedlicher Lichtfarbe in ein Lichtleiterelement einkoppelnden Lichtquellen, einer zur Erzeugung eines Wildunfallvermeidungslichts (WUVL) vorgesehenen ersten Lichtquelle und einer zur Erfüllung einer Lichtfunktion der Kraftfahrzeugleuchte vorgesehenen zweiten Lichtquelle in einer Vorderansicht.
- Fig. 4: eine Kraftfahrzeugleuchte mit mehreren, Licht zweier unterschiedlicher Lichtfarben abstrahlenden Lichtquellen, von denen je einer zur Erzeugung eines Wildunfallvermeidungslichts (WUVL) vorgesehenen ersten Lichtquelle und einer zur Erfüllung einer Lichtfunktion der Kraftfahrzeugleuchte vorgesehenen zweiten Lichtquelle je ein Reflektor zugeordnet ist, in einer Vorderansicht.
- Fig. 5: eine schematische Darstellung von Einflussgrößen zum Betrieb einer ein Wildunfallvermeidungslicht (WUVL) erzeugenden Kraftfahrzeugleuchte.
- Fig. 6: eine schematische Darstellung eines Betriebs einer ein Wildunfallvermeidungslicht (WUVL) erzeugenden Kraftfahrzeugleuchte.
- Fig. 7: eine schematische Darstellung einer zu einem in Fig. 6 dargestellten Betrieb geeigneten, ein Wildunfallvermeidungslicht (WUVL) erzeugenden Kraftfahrzeugleuchte in einer Vorderansicht.

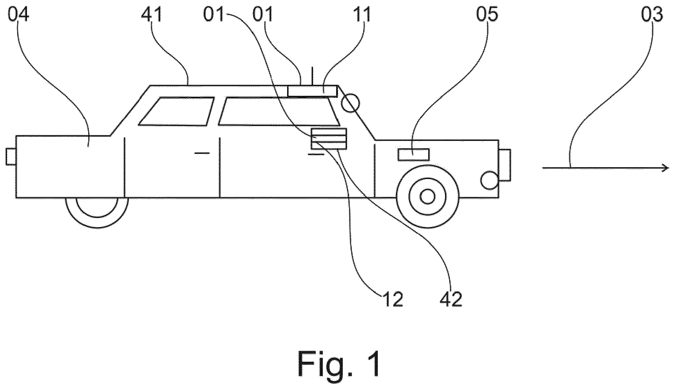

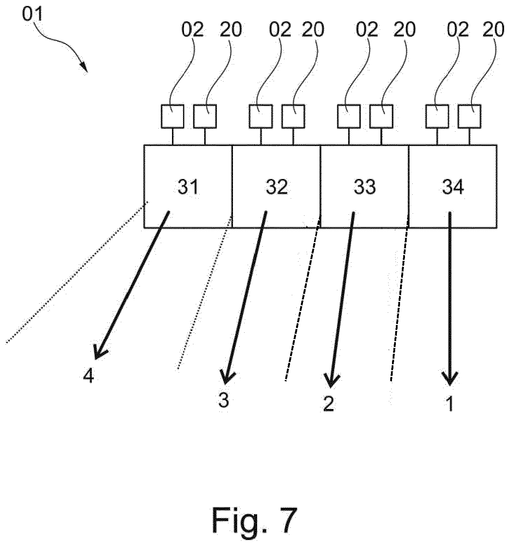

Eine in Fig. 1 bis Fig. 7 ganz oder in Teilen dargestellte Kraftfahrzeugleuchte 01 umfasst mindestens eine zur Erzeugung eines Wildunfallvermeidungslichts (WUVL) vorgesehene Lichtquelle 02, welche Licht insbesondere einer von Wildtieren als Warnfarbe wahrgenommenen und/oder einer für das menschliche Auge nicht sichtbaren Wellenlänge in die Umgebung, zumindest jedoch entlang des in Fahrtrichtung 03 eines Kraftfahrzeugs 04 liegenden Verlaufs einer Fahrbahn abstrahlt.

Die Kraftfahrzeugleuchte 01 zeichnet sich durch Mittel zum fahrzustands- und bevorzugt umgebungsabhängigen Betrieb der mindestens einen zur Erzeugung des WUVL vorgesehenen Lichtquelle 02 aus.

Die Kraftfahrzeugleuchte 01 kann einen von einem Leuchtengehäuse und einer Lichtscheibe zumindest teilweise umschlossenen Leuchteninnenraum aufweisen. Der Leuchteninnenraum kann zumindest zum Teil wenigstens eine zur Erzeugung des WUVL vorgesehene Lichtquelle 02 beherbergen.

Ein gegebenenfalls vorgesehenes Leuchtengehäuse bzw. der gegebenenfalls vorgesehene Leuchteninnenraum kann in mehrere Kammern mit jeweils eigenen Lichtquellen und/oder Leuchtmitteln und/oder Optikelementen sowie gegebenenfalls Lichtscheiben unterteilt sein, von denen mehrere Kammern gleiche und/oder jede Kammer eine andere Lichtfunktionen erfüllen kann.

Die Lichtscheibe ist durch eine bevorzugt aus einem Kunststoff hergestellte, transparente Abdeckung gebildet, welche den Leuchteninnenraum abschließt und die darin beherbergten Bauteile, wie etwa ein oder mehrere Leuchtmittel, Reflektoren sowie alternativ oder zusätzlich vorgesehene Optikelemente gegen Witterungseinflüsse schützt.

Die mindestens eine zur Erzeugung des WUVL vorgesehene Lichtquelle 02 strahlt Licht blauer und/oder ultravioletter Lichtfarbe ab.

Bei der mindestens einen zur Erzeugung des WUVL vorgesehenen Lichtquelle 02 handelt es sich bevorzugt um wenigstens eine LED und/oder zumindest eine Emitterschicht einer oder mehrerer OLEDs.

Die Mittel zum fahrzustands- und bevorzugt umgebungsabhängigen Betrieb der mindestens einen zur Erzeugung des WUVL vorgesehenen Lichtquelle 02 können mindestens eine Schnittstelle zum Austausch von einen Fahrzustand widerspiegelnden Informationen, wie Fahrgeschwindigkeit und bevorzugt Beschleunigung und/oder Gaspedalstellung und/oder Bremspedalbetätigung und/oder Bremspedalbetätigungsgeschwindigkeit und/oder Seitenbeschleunigung, um nur einige denkbare Größen zu nennen, beispielsweise mit einem Steuergerät 05 eines Kraftfahrzeugs 04 umfassen, und/oder einen oder mehrere Sensoren 06 zur Erfassung von Fahrzuständen, wie beispielsweise einen ein einer Fahrgeschwindigkeit eines Kraftfahrzeugs 04 proportionales Ausgangssignal erzeugenden Fahrgeschwindigkeitssensor 61 und/oder einen ein einer Beschleunigung eines Kraftfahrzeugs 04 proportionales Ausgangssignal erzeugenden Beschleunigungssensor und/oder einen ein einer Gaspedalstellung eines Kraftfahrzeugs 04 proportionales Ausgangssignal erzeugenden Gaspedalstellungssensor und/oder einen ein einer Bremspedalbetätigung eines Kraftfahrzeugs 04 proportionales Ausgangssignal erzeugenden Bremspedalbetätigungssensor und/oder einen ein einer Bremspedalbetätigungsgeschwindigkeit eines Kraftfahrzeugs 04 proportionales Ausgangssignal erzeugenden Bremspedalbetätigungsgeschwindigkeitsensor und/oder, um nur einige denkbare Sensoren 06 zu nennen, anhand denen ein Fahrzustand ermittelt werden kann.

Die Erzeugung des WUVL ist hiernach gesteuert von Fahrzuständen, z.B. bei Geschwindigkeiten, wie sie überwiegend entlang von Fahrbahnabschnitten ohne Gefährdung von Fußgängern vorkommen. Hierdurch wird Innerorts eine Abstrahlung insbesondere ultravioletten Lichts vermieden und dadurch die Beeinträchtigung anderer Verkehrsteilnehmer gesenkt.

Das WUVL wird nur bei Außerortsgeschwindigkeiten erzeugt.

Ein geschwindigkeitsadaptiertes WUVL, das erst bei Außerortsgeschwindigkeiten aktiviert wird, beugt Schädigungen der Augen vor allem bei Kindern vor, die auf Höhe des WUVL stehen und nicht merken, dass sie von UV-Licht bestrahlt werden.

Die Mittel zum fahrzustands- und bevorzugt umgebungsabhängigen Betrieb der mindestens einen zur Erzeugung des WUVL vorgesehenen Lichtquelle 02 können zusätzlich mindestens eine Schnittstelle zum Austausch von einen Umgebungszustand widerspiegelnden Informationen, wie beispielsweise Umgebungshelligkeit und/oder Sichtweite und/oder Niederschlag, um nur einige denkbare Größen zu nennen, beispielsweise mit einem Steuergerät 05 eines Kraftfahrzeugs 04 umfassen, und/oder einen oder mehrere Sensoren 07 zur Erfassung von Umgebungszuständen umfassen, wie etwa eines beispielsweise in Form einer Kamera mit einer Bilderfassungssoftware ausgeführten Sensors 71 zur Erfassung eines Fahrbahnverlaufs und/oder einer Beschaffenheit der Umgebung des Fahrbahnverlaufs, wie etwa einer Waldumgebung, in der Wildtiere vorkommen, und/oder eines beispielsweise als ein Infrarot-Sensor ausgeführten Sensors 72 zur Erfassung von Menschen und/oder Tieren in der Umgebung des Kraftfahrzeugs 04. Alternativ oder zusätzlich können Umgebungshelligkeit und/oder Sichtweite und/oder Niederschlag erfasst werden, um nur einige weitere denkbare Größen zu nennen, anhand denen ein Umgebungszustand ermittelt werden kann.

Hierdurch kann die Erzeugung des WUVL zusätzlich abhängig von Umgebungszuständen gesteuert sein, vorzugsweise abhängig von den herrschenden Lichtverhältnissen, beispielsweise um zwischen Tag- und Nachtfahrten unterscheiden zu können.

Beispielsweise kann das WUVL hierdurch nur bei Dämmerung und/oder Dunkelheit erzeugt werden.

Durch eine Kombination eines umgebungs- und fahrzustandsabhängigen Betriebs der mindestens einen zur Erzeugung des WUVL vorgesehenen Lichtquelle 02 kann beispielsweise bei einer mit einer hohen Bremspedalbetätigungsgeschwindigkeit einhergehenden plötzlichen Bremspedalbetätigung das WUVL zumindest kurzzeitig durch Einschalten der hierfür vorgesehenen mindestens einen Lichtquelle 02 erzeugt werden, um bei einer möglichen Ursache der plötzlichen Bremspedalbetätigung durch Wildtiere diese zu versuchen in die Flucht zu schlagen, um Wildunfälle zu vermeiden.

Vorzugsweise findet zum fahrzustands- und bevorzugt umgebungsabhängigen Betrieb der mindestens einen zur Erzeugung des WUVL vorgesehenen Lichtquelle 02 eine Vernetzung mit in einem Kraftfahrzeug 04 beispielsweise zum Betrieb etwa eines Matrixscheinwerfers 08 und/oder eines Fahrassistenzsystems bevorzugt ohnehin vorhandenen Sensoren 06, 07 statt, mittels denen nicht nur Fahrzustände, sondern bevorzugt auch Umgebungszustände, wie etwa Personen 09 und/oder Objekte im Bereich des Fahrbahnverlaufs erfasst werden können und eine oder mehrere das WUVL erzeugenden Lichtquellen 02 von den Ausgangssignalen der Sensoren und/oder einer die Sensordaten hinsichtlich beispielsweise der genannten Kriterien auswertenden Auswerteeinheit, wie beispielsweise eines Steuergeräts 05 abhängig betrieben werden.

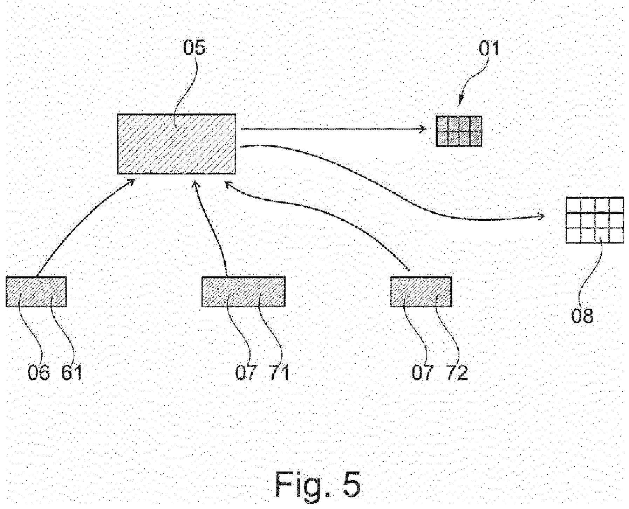

Die Kraftfahrzeugleuchte 01 kann wie in Fig. 1 und in Fig. 5 angedeutet allein zur Erfüllung des WUVL ausgebildet sein.

Beispielsweise kann die Kraftfahrzeugleuchte 01 als eine in Fig. 1 dargestellte, zum Einbau im Dachbereich eines Kraftfahrzeugs 04 vorgesehene Wildunfallvermeidungsleuchte 11 ausgebildet sein. Beispielsweise kann eine solche Wildunfallvermeidungsleuchte 11 zum Einbau im Bereich der A-Säule oder beispielsweise an der in Fahrtrichtung 03 vorne liegenden Seite einer auf dem Dach 41 eines Kraftfahrzeugs 04 angeordneten Dachreling vorgesehen sein.

Die Anordnung im Bereich der A-Säule oder einer Dachreling birgt den Vorteil einer möglichst hohen Anordnung, um trotz gegebenenfalls scharfer Hell-Dunkel-Grenze möglichst weit und vorausschauend Wild abzuschrecken.

Alternativ kann die Kraftfahrzeugleuchte 01 zur Erfüllung des WUVL in Kombination mit einer oder mehreren von einer Kraftfahrzeugleuchte 01 zu erfüllenden Lichtfunktionen ausgebildet sein.

Eine Kombination des WUVL mit anderen Lichtfunktionen weist den Vorteil auf, dass kein zusätzlicher Platzbedarf am Fahrzeug 04 besteht.

Die Kraftfahrzeugleuchte 01 umfasst hierzu zusätzlich zu der mindestens einen das WUVL erzeugenden ersten Lichtquelle 02 mindestens ein zur Erfüllung wenigstens einer Lichtfunktion der Kraftfahrzeugleuchte 01 vorgesehenes, mindestens eine zweite Lichtquelle 20 umfassendes Leuchtmittel.

Eine entsprechende Kraftfahrzeugleuchte 01 erfüllt je nach Ausgestaltung zusätzlich zur sensorgesteuerten Abgabe des WUVL eine oder mehrere Aufgaben beziehungsweise Funktionen. Zur Erfüllung jeder Aufgabe beziehungsweise Funktion ist mindestens eine Lichtfunktion der Kraftfahrzeugleuchte 01 vorgesehen.

Lichtfunktionen sind beispielsweise bei einer Ausgestaltung als Scheinwerfer eine die Fahrbahn ausleuchtende Funktion, oder bei einer Ausgestaltung als Signalleuchte eine Signalfunktion, wie beispielsweise eine Wiederholblinklichtfunktion zur Fahrtrichtungsanzeige oder eine Bremslichtfunktion zur Anzeige einer Bremstätigkeit, oder z.B. einer Begrenzungslichtfunktion, wie etwa einer Rücklichtfunktion, zur Sicherstellung einer Sichtbarkeit des Kraftfahrzeugs bei Nacht und/oder Tag, wie etwa bei einer Ausgestaltung als eine Heckleuchte oder als eine Tagfahrleuchte.

Jede von einer Kraftfahrzeugleuchte 01 zu erfüllende Lichtfunktion muss eine beispielsweise gesetzlich vorgegebene Lichtverteilung erfüllen. Die Lichtverteilung legt dabei mindestens einzuhaltende, umgangssprachlich als Helligkeit bezeichnete Lichtströme in zumindest einzuhaltenden Raumwinkelbereichen fest. Dabei sind je nach Lichtfunktion auch Raumwinkelbereiche vorgegeben, in die kein oder nur begrenzt Licht abgestrahlt werden darf, beispielsweise um eine Blendwirkung anderer Verkehrsteilnehmer auszuschließen.

Wenigstens einer Lichtquelle 20 zumindest eines zur Erfüllung mindestens einer Lichtfunktion der Kraftfahrzeugleuchte 01 vorgesehenen Leuchtmittels können ein oder mehrere zur Ausformung einer beispielsweise gesetzlich vorgegebenen Lichtverteilung beitragende Optikelemente zur Lichtlenkung zugeordnet sein.

Bei den erwähnten Optikelementen kann es sich um wenigstens einen Reflektor 30 und/oder um mindestens eine Linse und/oder um eine oder mehrere im Strahlengang zwischen wenigstens einer Lichtquelle 20 des Leuchtmittels und der Lichtscheibe angeordnete Optikscheiben oder dergleichen handeln, um nur einige denkbare Optikelemente zu nennen.

Die Kraftfahrzeugleuchte 01 kann eine oder mehrere LEDs und/oder eine oder mehrere OLEDs als zumindest eine zur Erfüllung einer Lichtfunktion der Kraftfahrzeugleuchte 01 vorgesehene Lichtquelle 20 aufweisen.

Die zusätzlich zu mindestens einer zur Erzeugung des WUVL vorgesehenen Lichtquelle 02 wenigstens eine weitere zur Erfüllung zumindest einer Lichtfunktion vorgesehene Lichtquelle 20 umfassende Kraftfahrzeugleuchte 01 ist bevorzugt als eine an einer Fahrzeugflanke und/oder am Fahrzeugbug und/oder an den Außenrückblickspiegeln 42 eines Kraftfahrzeugs 04 vorgesehene Wiederholblinkleuchte 12 ausgebildet.

Hierbei ist die Kraftfahrzeugleuchte 01 als eine an den Fahrzeugflanken und/oder an und/oder in einem Außenrückblickspiegel 42 anzuordnende Wiederholblinkleuchte 12 ausgebildet, welche mindestens eine Lichtquelle 02 zur Erzeugung des WUVL umfasst, sowie Mittel zum fahrzustands- und bevorzugt umgebungsabhängigen Betrieb der mindestens einen zur Erzeugung des WUVL vorgesehenen mindestens einen Lichtquelle 02, und welche mindestens eine zur Erfüllung einer einer Fahrtrichtungsanzeige dienenden Wiederholblinklichtfunktion vorgesehene Lichtquelle 20 umfasst.

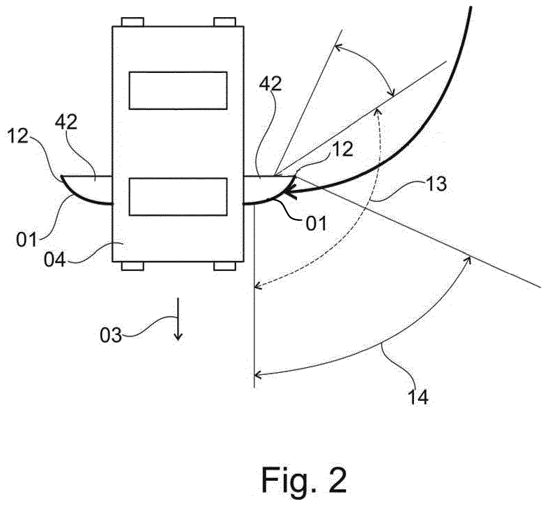

Das WUVL kann in diesem Fall den selben Abstrahlbereich 13 wie beispielsweise eine Wiederholblinklichtfunktion aufweisen, oder wie in Fig. 2 dargestellt nur einen Teilabstrahlbereich 14, beispielsweise einen durch die Fahrtrichtung 03 und einem begrenzten Winkel nach außen kleiner als beispielsweise 45° in Bezug auf die Fahrtrichtung 03 begrenzten Teilabstrahlbereich 14 aufweisen.

Eine Kombination des WUVL mit einer nach vorne gerichteten Lichtfunktion ermöglichen einen optimalen Abstrahlbereich des WUVL.

Mindestens einer Lichtquelle 02, 20 der Kraftfahrzeugleuchte 01 kann ein Lichtleiterelement 50 zugeordnet sein.

Ein Lichtleiterelement 50 weist mindestens eine Lichteinkoppelfläche 51 sowie mindestens eine von der Lichteinkoppelfläche 51 verschiedene Lichtaustrittsfläche 52 auf. An der mindestens einen Lichteinkoppelfläche 51 wird Licht mindestens einer Lichtquelle 02, 20 in das Lichtleiterelement 50 eingekoppelt und an der mindestens einen von der Lichteinkoppelfläche 51 verschiedenen Lichtaustrittsfläche 52 wird das Licht wieder aus dem Lichtleiterelement 50 ausgekoppelt.

Das Lichtleiterelement 50 kann darüber hinaus mindestens eine wenigstens einer Lichtaustrittsfläche 52 zugeordnete, von dieser zugeordneten Lichtaustrittsfläche 52 verschiedene, beispielsweise auf einer Lichtleiterrückseite gegenüber der Lichtaustrittsfläche 52 angeordnete Lichtumlenkfläche aufweisen.

Denkbar ist eine Ausführung als farbmischendes Lichtleiterelement, in welches sowohl Licht mindestens einer zur Erfüllung einer Lichtfunktion 20 der Kraftfahrzeugleuchte 01 vorgesehenen Lichtquelle, als auch das Licht mindestens einer ein WUVL erzeugenden Lichtquelle 02 eingekoppelt wird.

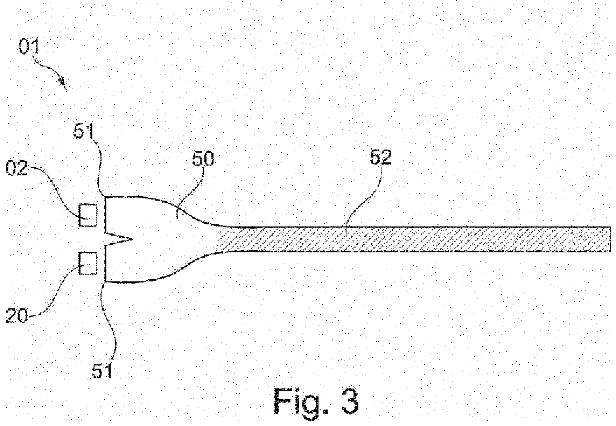

Beispielsweise kann wie in Fig. 3 dargestellt den zur Erzeugung des WUVL und zur Erfüllung der Widerholblinklichtfunktion vorgesehenen Lichtquellen 02, 20 der Kraftfahrzeugleuchte 01 ein Lichtleiterelement 50 zugeordnet sein.

Das Licht der unterschiedlichen Lichtquellen 02, 20 kann im selben Abstrahlbereich 13 aus dem Lichtleiterelement 50 ausgekoppelt werden, oder in unterschiedlichen Abstrahlbereichen 14, 13 für das WUVL und die Lichtfunktion.

Ein gegebenenfalls vorgesehenes Lichtleiterelement 50 kann Teil eines eine oder mehrere Licht gleicher oder unterschiedlicher Lichtfarbe abstrahlender Lichtquellen 02, 20 umfassenden, beispielsweise in einem gegebenenfalls vorgesehenen Leuchteninnenraum zumindest teilweise beherbergten Leuchtmittels sein, oder als separates Bauteil der Kraftfahrzeugleuchte 01 ausgebildet sein, beispielsweise indem das Lichtleiterelement 50 als separates Bauteil in einem gegebenenfalls vorgesehenen Leuchteninnenraum untergebracht ist.

Dem Lichtleiterelement 50 kann mindestens ein Optikelement, wie etwa ein Reflektor 30 und/oder eine Optikscheibe und/oder ein Rinnenkonzentrator zugeordnet sein, um nur einige mögliche Optikelemente aufzuzählen.

Ein Lichtleiterelement 50 erlaubt ein vollständiges Verbergen der ihr Licht in das Lichtleiterelement 50 einstrahlenden Lichtquellen 02, 20 beim Blick auf die Kraftfahrzeugleuchte 01. Lichtleiterelemente 50 leiten das von einer oder mehreren verborgen angeordneten Lichtquellen 02, 20 in sie eingekoppelte Licht und koppeln es entfernt von der Einkopplung wieder aus. Das ausgekoppelte Licht kann dabei direkt, ohne einen Reflektor 30 in der gewünschten Richtung abgestrahlt werden, oder indirekt, indem es in einen Reflektor 30 eingestrahlt wird, der es dann in die gewünschte Richtung reflektiert. Auch Kombinationen aus direkter und indirekter Abstrahlung sind möglich, wobei das Lichtleiterelement 50 hinter der Lichtscheibe sowie gegebenenfalls einer Optikscheibe von außerhalb des Leuchteninnenraums aus sichtbar angeordnet ist und zusätzlich ein hinter dem Lichtleiterelement 50 angeordneter Reflektor 30 vorgesehen ist.

Lichtleiterelemente 50 werden zunehmend anstelle von oder zusätzlich zu einem oder mehreren der erwähnten Optikelemente in Kraftfahrzeugleuchten 01 eingesetzt, beispielsweise gerade weil diese eine für einen Betrachter verborgene Anordnung der Lichtquellen 02, 20 ermöglichen.

Das Lichtleiterelement 50 kann beispielsweise stabförmig als so genanntes Stablichtleiterelement und/oder flächig als so genanntes Flächenlichtleiterelement ausgebildet sein, mit einer oder mehreren, auf seiner beispielsweise in Richtung einer Hauptabstrahlrichtung orientierten Vorderseite angeordneten Lichtaustrittsflächen 52.

Eine zusätzlich zu mindestens einer zur Erzeugung des WUVL vorgesehenen Lichtquelle 02 wenigstens eine weitere zur Erfüllung zumindest einer Lichtfunktion vorgesehene Lichtquelle 20 umfassende Kraftfahrzeugleuchte 01 kann alternativ als eine am Fahrzeugbug eines Kraftfahrzeugs 04 vorgesehene Tagfahrleuchte und/oder als ein zumindest eine Abblendlichtfunktion erfüllender Scheinwerfer und/oder als Nebelscheinwerfer und/oder als eine beispielsweise in einen Nebelscheinwerfer integrierte bzw. durch einen Nebelscheinwerfer erfüllte Abbiegeleuchte ausgebildet sein, welche mindestens eine Lichtquelle 02 zur Erzeugung des WUVL umfasst, sowie Mittel zum fahrzustands- und bevorzugt umgebungsabhängigen Betrieb der mindestens einen zur Erzeugung des WUVL vorgesehenen Lichtquelle 02, und welche mindestens eine zur Erfüllung einer Abblendlichtfunktion und/oder einer Tagfahrlichtfunktion und/oder einer Nebelscheinwerferlichtfunktion vorgesehene Lichtquelle 20 umfasst.

Das WUVL kann in diesem Fall den selben Abstrahlbereich wie beispielsweise eine Abblendlichtfunktion und/oder einer Tagfahrlichtfunktion und/oder einer Nebelscheinwerferlichtfunktion und/oder einer Abbiegelichtfunktion, oder nur einen Teilabstrahlbereich, beispielsweise einen begrenzten Winkel ausgehend von der Fahrtrichtung nach außen aufweisen.

Eine zusätzlich zu mindestens einer zur Erzeugung des WUVL vorgesehenen Lichtquelle 02 wenigstens eine weitere zur Erfüllung zumindest einer Lichtfunktion vorgesehene Lichtquelle 20 umfassende Kraftfahrzeugleuchte 01 kann alternativ als eine Heckleuchte ausgebildet sein, wobei die Heckleuchte Mittel zur Umlenkung des WUVL nach vorne in Fahrtrichtung 03 umfasst, beispielsweise ein Umlenkprisma, welches das WUVL an der mit einer Fahrzeugflanke eines hiermit ausgestatteten Kraftfahrzeugs 04 beispielsweise bündigen Außenflanke der Heckleuchte nach vorne in Fahrtrichtung 03 des Kraftfahrzeugs 04 in einen gewünschten in Richtung Front/Seite liegenden Zielbereich ablenkt.

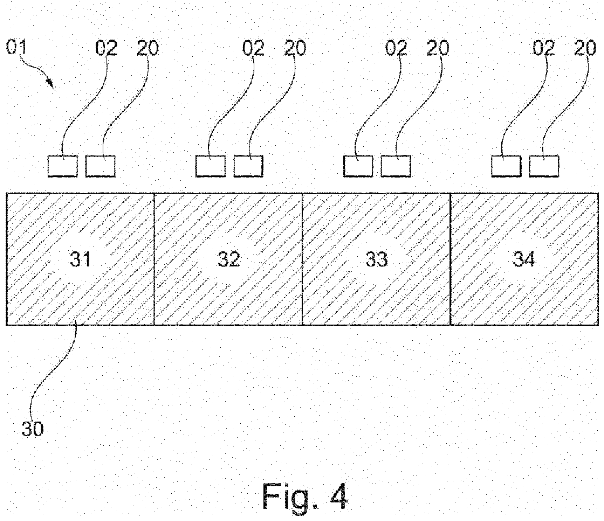

Wie in Fig. 3 und in Fig. 4 dargestellt kann die mindestens eine blaues und/oder ultraviolettes Licht abstrahlende, zur Erzeugung des WUVL vorgesehene Lichtquelle 02 Teil eines zur Erfüllung einer Lichtfunktion der Kraftfahrzeugleuchte 01 vorgesehenen Leuchtmittels sein, welches mindestens zwei Lichtquellen 02, 20 unterschiedlicher Lichtquellenfarben aufweist, mindestens eine erste Lichtquelle 02, welche Licht insbesondere einer von Wildtieren als Warnfarbe wahrgenommenen und/oder einer für das menschliche Auge nicht sichtbaren Wellenlänge zur Erzeugung eines WUVL abstrahlt, sowie mindestens eine zweite Lichtquelle 20 einer Lichtquellenfarbe zur Erfüllung einer Lichtfunktion der Kraftfahrzeugleuchte 01.

Besonders bevorzugt handelt es sich zumindest bei den unterschiedliche Lichtquellenfarben abstrahlenden Lichtquellen 02, 20 um LEDs und/oder Emitterschichten einer oder mehrerer OLEDs.

Die Licht unterschiedlicher Lichtquellenfarben abstrahlenden Lichtquellen 02, 20 einer zusätzlich zu mindestens einer zur Erzeugung des WUVL vorgesehenen Lichtquelle 02 wenigstens eine weitere zur Erfüllung zumindest einer Lichtfunktion vorgesehene Lichtquelle 20 umfassenden Kraftfahrzeugleuchte 01, beispielsweise einer Kraftfahrzeugleuchte 01 mit zumindest einem wenigstens zwei Licht unterschiedlicher Lichtquellenfarben abstrahlende Lichtquellen 02, 20 umfassenden Leuchtmittel können unabhängig voneinander betreibbar sein.

Hierdurch kann durch Betrieb der Lichtquellen 02, 20 sämtlicher Lichtquellenfarben sowohl eine Lichtfunktion der Kraftfahrzeugleuchte 01 erfüllt werden, als auch ein WUVL erzeugt werden, sowie durch Betrieb nur der Lichtquellen 02, 20 einer Lichtquellenfarbe entweder eine Lichtfunktion der Kraftfahrzeugleuchte 01 erfüllt werden, oder ein WUVL erzeugt werden.

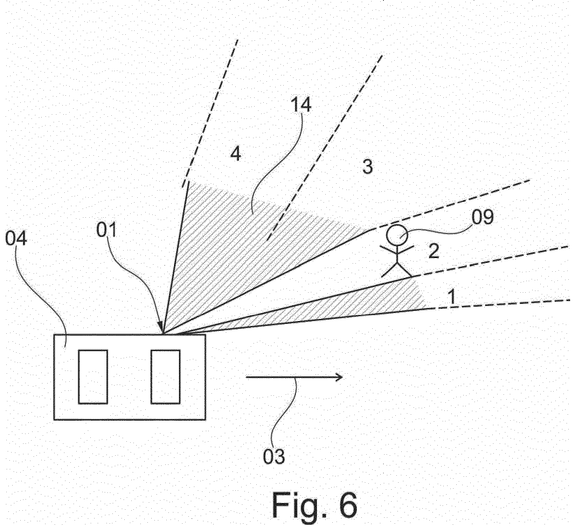

In Verbindung beispielsweise mit einer Umgebungszustandserfassung, die wie in Fig. 6 dargestellt eine Erfassung anderer Verkehrsteilnehmer, insbesondere von Personen 09 im weiteren Fahrbahnverlauf ermöglicht, ist darüber hinaus der gezielte Betrieb einzelner zur Erfüllung des WUVL vorgesehener Lichtquellen 02 einer Kraftfahrzeugleuchte 01 mit mehreren zur Erfüllung des WUVL vorgesehener Lichtquellen 02 denkbar.

Hierbei können den einzelnen zur Erfüllung des WUVL vorgesehenen Lichtquellen 02 beispielsweise einzelne Reflektoren oder Reflektorpartien 31, 32, 33, 34 zugeordnet sein, welche das von den zur Erfüllung des WUVL vorgesehenen Lichtquellen 02 abgestrahlte Licht gezielt in einzelne Segmente 1, 2, 3, 4 des Abstrahlbereichs 13 bzw. Teilabstrahlbereichs 14 des WUVL lenken (Fig. 5, Fig. 6, Fig. 7).

Im Falle der Erfassung beispielsweise von Personen 09 in einem bestimmten Abstand und einer bestimmten Richtung zum Fahrzeug 04 können hierbei wie in Fig. 6 dargestellt einzelne zur Erfüllung des WUVL vorgesehene Lichtquellen 02 außer Betrieb geschaltet werden, um ein oder mehrere Segmente 1, 2, 3, 4 zu deaktivieren, um so die Beeinträchtigung dieser anderen Verkehrsteilnehmer durch das WUVL möglichst gering zu halten.

Mindestens einer zur Erzeugung des WUVL vorgesehenen Lichtquelle 02 können ein oder mehrere zur Ausformung einer beispielsweise einer zum Schutz anderer Verkehrsteilnehmer vorgesehenen, ausgeprägten Hell-Dunkel-Grenze beitragende Optikelemente zur Lichtlenkung zugeordnet sein.

Selbstverständlich können auch einer oder mehreren zur Erfüllung einer Lichtfunktion der Kraftfahrzeugleuchte 01 vorgesehenen Lichtquellen 20 ein oder mehrere zur Ausformung einer beispielsweise einer zum Schutz anderer Verkehrsteilnehmer vorgesehenen, ausgeprägten Hell-Dunkel-Grenze beitragende Optikelemente zur Lichtlenkung zugeordnet sein.

Bei den erwähnten Optikelementen kann es sich um wenigstens einen Reflektor 30 und/oder um mindestens eine Linse und/oder um eine oder mehrere im Strahlengang zwischen wenigstens einer Lichtquelle 02, 20 der Kraftfahrzeugleuchte 01 und der Lichtscheibe angeordnete Optikscheiben oder dergleichen handeln, um nur einige denkbare Optikelemente zu nennen.

Beispielsweise kann in einem gegebenenfalls vorgesehenen Leuchteninnenraum mindestens ein wenigstens einer Lichtquelle 02, 20 zugeordneter Reflektor 30 untergebracht sein. Der Reflektor 30 kann zumindest zum Teil durch ein separates Bauteil und/oder durch wenigstens einen Teil eines Leuchtengehäuses gebildet sein, beispielsweise vermittels einer zumindest teilweisen, reflektierenden Beschichtung.

Darüber hinaus können Walzen-, Kissen- oder andersartige Optiken in der Lichtscheibe und/oder einer zwischen mindestens einer Lichtquelle 02, 20 und der Lichtscheibe angeordneten Optikscheibe vorgesehen sein, um einer gewünschten Lichtverteilung für eine vorgegebene Lichtfunktion beizutragen.

Die Lichtscheibe selbst kann alternativ oder zusätzlich als ein Optikelement ausgebildet sein, beispielsweise indem sie vorzugsweise an deren mindestens einem Leuchtmittel zugewandter Innenseite mit einer zur Erzeugung einer oder mehrerer beispielsweise gesetzlich vorgegebener Lichtverteilungen beitragenden optischen Struktur versehen ist. Hierdurch kann gegebenenfalls auf eine Optikscheibe verzichtet werden.

Eine scharfe Hell-Dunkel-Grenze in Verbindung mit einer zusätzlichen Lichtfunktion kann beispielsweise durch unterschiedliche Einstrahlung von zur Erfüllung einer Lichtfunktion der Kraftfahrzeugleuchte 01 vorgesehenen Lichtquellen 20 und der zur Erzeugung des WUVL vorgesehenen Lichtquellen 02 in einen Reflektor 30 verwirklicht sein, ähnlich wie dies beispielsweise bei Frontscheinwerfern mit Abblend- und Fernlichtfunktion verwirklicht ist, oder wie dies beispielsweise wie in DE 10 2010 009 640 A1 beschrieben für eine Kombination von Tagfahr- und Nebelscheinwerferlichtfunktion vorgesehen sein kann, bevorzugt jedoch mit dem Unterschied, dass die Hell-Dunkel-Grenze des WUVL zumindest nicht oberhalb der Hell-Dunkel-Grenze der Lichtfunktion liegt, sondern bevorzugt darunter, um die Beeinträchtigung anderer Verkehrsteilnehmer gering zu halten.

Beispielsweise kann hierbei vorgesehen sein, dass das WUVL hinsichtlich einer Hell-Dunkel-Grenze Abblendlichtfunktionseigenschaften aufweist, um entgegenkommende Verkehrsteilnehmer nicht zu blenden, wohingegen mit den jeweils neben anliegenden Lichtquellen 20 eine Wiederholblinklichtfunktion verwirklicht sein kann, die eine Lichtverteilung auch oberhalb der Hell-Dunkel-Grenze hat.

Erfindungsgemäß umfasst die Kraftfahrzeugleuchte 01 Mittel zum gepulsten Betrieb der mindestens einen zur Erzeugung des WUVL dienenden Lichtquelle 02.

Die Mittel zum gepulsten Betrieb des WUVL können zumindest zum Teil von den Mitteln zum fahrzustands- und bevorzugt umgebungsabhängigen Betrieb der mindestens einen zur Erzeugung des WUVL vorgesehenen Lichtquelle 02 umfasst sein, oder diese wenigstens teilweise umfassen. Dies ermöglicht eine sensorische Erfassung der Umgebungsbedingungen und Anpassung des WUVL beispielsweise hinsichtlich Lichtstärke, Abstrahlrichtung, Pulsen, Farbe, um nur einige denkbare Ausgestaltungen zu nennen. Hinsichtlich der Abstrahlrichtung kann beispielsweise in Verbindung mit einer Fahrspurerkennung und/oder einer Fahrbahnranderkennung das WUVL nur an derjenigen Seite aktiviert werden, an denen ein Straßenrand besteht, oder wenn beispielsweise auf schmalen Nebenstrecken gar keine Fahrspurmarkierungen vorhanden sind, das WUVL beidseitig aktiviert werden.

Denkbar ist in diesem Zusammenhang auch, dass das WUVL mit einer zur Umgebungs-, wie beispielsweise Fahrbahnverlaufserkennung, dienenden Infrarot-Ausleuchtung eines Fahrassistenzsystems kombiniert werden kann.

Einer Gewöhnung des Wildes an die Lichtblitze wird, im Gegensatz zu einer gleichmäßigen Abstrahlung, durch ständig variierende Intensität entgegen gewirkt. Ein Überqueren der Straße beim Herannahen von Kraftfahrzeugen wird so weitgehend verhindert.

Beim Pulsen der Lichtquellen 02 für das WUVL können diese auch einer anderen Lichtfunktion überlagert werden, die beispielsweise in der gleichen Kammer einer Kraftfahrzeugleuchte verbaut sind.

Dem Betrachter nimmt das Pulsen bevorzugt nicht wahr, beispielsweise durch eine Kombination mit einem hellen Scheinwerfer, dem noch ein heller Puls in eine bestimmten Abstrahlrichtung überlagert wird. Durch ein im UV-Bereich abstrahlendes WUVL wird die Wahrnehmung durch Menschen ausgeschlossen.

Auch bei Abstrahlung des WUVL im Bereich des sichtbaren Lichts fällt dem Betrachter bei geringer Pulsbreite und/oder ausreichendem Pulsabstand die Überlagerung nicht auf.

Es ist ersichtlich, dass zumindest dieser Teil der Erfindung beispielsweise durch eine Kraftfahrzeugleuchte 01 mit einer sensorgestützten WUVL verwirklicht sein kann, welche abhängig von der Eigengeschwindigkeit eines mit einer solchen Kraftfahrzeugleuchte 01 ausgestatteten Kraftfahrzeugs und/oder der Umgebungshelligkeit dauerhaft oder beispielsweise pulsweitenmoduliert und/oder in Kombination mit Lichtpulsen aktiv ist.

Das Pulsen des Betriebs der mindestens einen zur Erzeugung des WUVL dienenden Lichtquelle 02 erfolgt geschwindigkeitsabhängig.

Bei Fahrzeuggeschwindigkeit von 100 km/h ≈ 27,78 m/s blitzt ein Puls von beispielsweise 3 Hz alle ca. 10 m. Dies ist immer noch deutlich kürzer als ein Abstand von an den Leitpfosten angeordneten Wildwarnern von ca. 50 m.

Durch eine Aktivierung des WUVL erst oberhalb einer Mindestgeschwindigkeit in Verbindung mit einem geschwindigkeitsadaptierten Pulsen werden andere Verkehrsteilnehmer nur geringfügig und kurz beispielsweise mit UV-Licht des WUVL bestrahlt.

Das WUVL kann mit einem akustischen Wildwarner kombiniert sein.

Grundsätzlich ist denkbar, einen Optikkörper einer LED so auszulegen, dass dieser die gewünschte Abstrahlcharkteristik eines WUVL erfüllt und so modular in Funktionskammern eingesetzt werden kann. Hierdurch wird ein Anbau- und Nachrüstteil geschaffen, mit dem ach bestehende Fahrzeuge nachgerüstet werden können, um bei diesen die Gefahr von Wildunfällen zu bannen.

Die Erfindung ist insbesondere im Bereich der Herstellung von Kraftfahrzeugleuchten gewerblich anwendbar.

### Bezugszeichenliste

- 1: Segment des Abstrahlbereichs 13 bzw. Teilabstrahlbereichs 14
- 2: Segment des Abstrahlbereichs 13 bzw. Teilabstrahlbereichs 14
- 3: Segment des Abstrahlbereichs 13 bzw. Teilabstrahlbereichs 14
- 4: Segment des Abstrahlbereichs 13 bzw. Teilabstrahlbereichs 14
- 01: Kraftfahrzeugleuchte
- 02: Lichtquelle (zur Erfüllung eines Wildunfallvermeidungslichts)
- 03: Fahrtrichtung
- 04: Kraftfahrzeug
- 05: Steuergerät
- 06: Sensor (zur Erfassung eines Fahrzustands)
- 07: Sensor (zur Erfassung eines Umgebungszustands)
- 08: Matrixscheinwerfer
- 09: Person
- 11: Wildunfallvermeidungsleuchte
- 12: Wiederholblinkleuchte
- 13: Abstrahlbereich
- 14: Teilabstrahlbereich
- 20: Lichtquelle
- 30: Reflektor
- 31: Reflektorpartie
- 32: Reflektorpartie
- 33: Reflektorpartie
- 34: Reflektorpartie
- 41: Dach
- 42: Außenrückblickspiegel
- 50: Lichtleiterelement
- 51: Lichteinkoppelfläche
- 52: Lichtaustrittsfläche
- 61: Fahrgeschwindigkeitssensor
- 71: Sensor
- 72: Sensor

## Patentansprüche

1. Kraftfahrzeugleuchte (01) mit mindestens einer zur Erzeugung eines Wildunfallvermeidungslichts, WUVL, vorgesehenen Lichtquelle (02), welche Licht einer insbesondere von Wildtieren als Warnfarbe wahrgenommenen und/oder für das menschliche Auge nicht sichtbaren Wellenlänge blauer und/oder ultravioletter Lichtfarbe in die Umgebung, zumindest jedoch entlang des Verlaufs einer Fahrbahn abstrahlt, umfassend Mittel zum fahrzustands- und bevorzugt umgebungsabhängigen Betrieb der mindestens einen zur Erzeugung des WUVL vorgesehenen Lichtquelle (02), wobei das WUVL nur bei Außerortsgeschwindigkeiten erzeugt wird, **dadurch gekennzeichnet, dass**
- die Kraftfahrzeugleuchte (02) Mittel zum gepulsten Betrieb des WUVL umfasst, und
- das Pulsen des WUVL geschwindigkeitsabhängig erfolgt.

2. Kraftfahrzeugleuchte nach Anspruch 1, wobei die Mittel zum fahrzustands- und bevorzugt umgebungsabhängigen Betrieb der mindestens einen zur Erzeugung des WUVL vorgesehenen Lichtquelle (02) mindestens eine Schnittstelle und/oder einen Sensor (06, 61) zur Erfassung von Fahrzuständen umfassen.

3. Kraftfahrzeugleuchte nach Anspruch 1 oder 2, wobei die Mittel zum fahrzustands- und bevorzugt umgebungsabhängigen Betrieb der mindestens einen zur Erzeugung des WUVL vorgesehenen Lichtquelle (02) mindestens eine Schnittstelle und/oder einen Sensor (07, 71, 72) zur Erfassung von Umgebungszuständen umfassen.

4. Kraftfahrzeugleuchte nach einem der voranstehenden Ansprüche, wobei es sich bei der mindestens einen zur Erzeugung des WUVL vorgesehenen Lichtquelle (02) um wenigstens eine LED und/oder zumindest eine Emitterschicht einer oder mehrerer OLEDs handelt.

5. Kraftfahrzeugleuchte nach einem der voranstehenden Ansprüche, wobei die Kraftfahrzeugleuchte (01) mindestens ein zur Erfüllung wenigstens einer weiteren Lichtfunktion der Kraftfahrzeugleuchte (01) vorgesehenes, mindestens eine Lichtquelle (20) umfassendes Leuchtmittel umfasst.

6. Kraftfahrzeugleuchte nach Anspruch 5, wobei die Kraftfahrzeugleuchte (01) als eine an einer Fahrzeugflanke und/oder am Fahrzeugbug und/oder an den Außenrückblickspiegeln (42) eines Kraftfahrzeugs (04) vorgesehene Wiederholblinkleuchte (12) ausgebildet ist.

7. Kraftfahrzeugleuchte nach Anspruch 5, wobei die Kraftfahrzeugleuchte (01) als eine am Fahrzeugbug eines Kraftfahrzeugs (04) vorgesehene Tagfahrleuchte und/oder als ein zumindest eine Abblendlichtfunktion erfüllender Scheinwerfer und/oder als Nebelscheinwerfer und/oder als eine beispielsweise in einen Nebelscheinwerfer integrierte und/oder durch einen Nebelscheinwerfer verwirklichte Abbiegeleuchte ausgebildet ist.

8. Kraftfahrzeugleuchte nach Anspruch 5, wobei die Kraftfahrzeugleuchte (01) als eine Heckleuchte ausgebildet ist, wobei die Heckleuchte Mittel zur Umlenkung des WUVL nach vorne in Fahrtrichtung (03) umfasst, welche das WUVL in Richtung Front/Seite ablenken.

9. Kraftfahrzeugleuchte nach einem der vorhergehenden Ansprüche, wobei die zur Erzeugung des WUVL vorgesehene Lichtquelle (02) Teil eines zur Erfüllung einer weiteren Lichtfunktion der Kraftfahrzeugleuchte (01) vorgesehenen Leuchtmittels ist welches mindestens zwei Lichtquellen (02, 20) unterschiedlicher Lichtquellenfarben aufweist, mindestens eine erste Lichtquelle (02), welche Licht zur Erzeugung des WUVL abstrahlt, sowie mindestens eine zweite Lichtquelle (20) einer Lichtquellenfarbe zur Erfüllung der weiteren Lichtfunktion der Kraftfahrzeugleuchte (01).

10. Kraftfahrzeugleuchte nach Anspruch 9, wobei die Licht unterschiedlicher Lichtquellenfarben abstrahlenden Lichtquellen (02, 20) unabhängig voneinander betreibbar sind.

11. Kraftfahrzeugleuchte nach einem der vorhergehenden Ansprüche, wobei mindestens einer zur Erzeugung des WUVL vorgesehenen Lichtquelle (02) ein oder mehrere zur Ausformung einer Hell-Dunkel-Grenze beitragende Optikelemente zur Lichtlenkung zugeordnet sind.

## Claims

1. A motor vehicle lamp (01) with at least one light source (02) provided for the production of an animal-vehicle collision prevention light, WUVL, which light source (02) emits a blue and/or ultraviolet luminous colour, in particular of a wavelength that is perceived by wildlife as a warning colour and/or that is not visible to the human eye, into the surrounding, at least, however, along the course of a lane, the motor vehicle lamp (01) comprising
means for the driving-state-dependent and preferably environment-dependent operation of the at least one light source (02) provided for the production of the WUVL,
wherein the WUVL is only produced at out-of-town speeds,
**characterised in that**
- the motor vehicle lamp (02) comprises means for the pulsed operation of the WUVL, and
- the pulsing of the WUVL is carried out in a speed-dependent manner.

2. The motor vehicle lamp according to claim 1, wherein, for the driving-state-dependent and preferably environment-dependent operation of the at least one light source (02) provided for the production of the WUVL, the means comprise at least one interface and/or at least one sensor (06, 61) for the detection of driving states.

3. The motor vehicle lamp according to claim 1 or 2, wherein, for the driving-state-dependent and preferably environment-dependent operation of the at least one light source (02) provided for the production of the WUVL, the means comprise at least one interface and/or at least one sensor (07, 71, 72) for the detection of environment states.

4. The motor vehicle lamp according to one of the previous claims, wherein the at least one light source (02) provided for the production of the WUVL is at least one LED and/or at least one emitter layer of one or more OLEDs.

5. The motor vehicle lamp according to one of the previous claims, wherein the motor vehicle lamp (01) comprises at least one illuminant comprising at least one light source (20) provided for the fulfilment of at least one further light function of the motor vehicle lamp (01).

6. The motor vehicle lamp according to claim 5, wherein the motor vehicle lamp (01) is configured as a repeater blinker lamp (12) provided at a vehicle body side and/or at the vehicle body front and/or at the outer rear-view mirrors (42) of a motor vehicle (04).

7. The motor vehicle lamp according to claim 5, wherein the motor vehicle lamp (01) is configured as a daytime running lamp provided at the vehicle body front of a motor vehicle (04) and/or as a headlamp fulfilling at least one low beam function and/or as a fog lamp and/or as a direction indicator lamp, for example integrated into a fog lamp and/or realised as a fog lamp.

8. The motor vehicle lamp according to claim 5, wherein the motor vehicle lamp (01) is configured as a tail lamp, wherein the tail lamp comprises means for the deflection of the WUVL forward in driving direction (03), with the means diverting the WUVL toward the front/side.

9. The motor vehicle lamp according to one of the previous claims, wherein the light source (02) provided for the production of the WUVL is a part of an illuminant provided for the fulfilment of a further light function of the motor vehicle lamp (01), the illuminant having at least two light sources (02, 20) of different light source colours, with at least one first light source (02) emitting light for the production of the WUVL, as well as at least one second light source (20) of a light source colour for the fulfilment of the further light function of the motor vehicle lamp (01).

10. The motor vehicle lamp according to claim 9, wherein the light sources (02, 20) emitting light of different light source colours are operable independently of each other.

11. The motor vehicle lamp according to one of the previous claims, wherein one or more optical elements contributing to the formation of a light/dark boundary are assigned for the purpose of light guidance to at least one light source (02) provided for the production of the WUVL.

## Revendications

1. Phare de véhicule automobile (01) doté d'au moins une source lumineuse (02) prévue pour générer une lumière pour éviter les accidents avec du gibier, WUVL, laquelle source lumineuse diffuse de la lumière de couleur bleue et/ou ultraviolette, perçue notamment par les animaux sauvages comme couleur d'alerte et/ou d'une longueur d'onde invisible pour l'œil humain, et ce dans les environs, néanmoins au moins le long d'une trajectoire d'une route, comprenant des moyens pour faire fonctionner ladite au moins une source lumineuse (02) en fonction de l'état de marche et, de préférence, des environs, prévue pour générer la WUVL,
ladite WUVL n'étant générée qu'à des vitesses hors agglomération,
**caractérisé en ce que**
- ledit phare de véhicule automobile (02) comprend des moyens pour faire fonctionner la WUVL par impulsions, et
- l'envoi des impulsions de la WUVL s'effectue en fonction de la vitesse.

2. Phare de véhicule automobile selon la revendication 1, lesdits moyens pour faire fonctionner ladite au moins une source lumineuse (02) en fonction de l'état de marche et, de préférence, des environs, prévue pour générer la WUVL, comprenant au moins une interface et/ou un capteur (06, 61) destiné à détecter les états de marche.

3. Phare de véhicule automobile selon la revendication 1 ou 2, lesdits moyens pour faire fonctionner ladite au moins une source lumineuse (02) en fonction de l'état de marche et, de préférence, des environs, prévue pour générer la WUVL, comprenant au moins une interface et/ou un capteur (07, 71, 72) destiné à détecter les états des environs.

4. Phare de véhicule automobile selon l'une quelconque des revendications précédentes, ladite au moins une source lumineuse (02) prévue pour générer la WUVL étant au moins une DEL et/ou au moins une couche émettrice d'une ou de plusieurs diodes électroluminescentes organiques.

5. Phare de véhicule automobile selon l'une quelconque des revendications précédentes, ledit phare de véhicule automobile (01) comprenant au moins un moyen d'éclairage prévu pour remplir au moins une autre fonction lumineuse dudit phare de véhicule automobile (01), et comprenant au moins une source lumineuse (20).

6. Phare de véhicule automobile selon la revendication 5, ledit phare de véhicule automobile (01) étant réalisé en tant que feu clignotant à répétition (12) prévu sur un flanc du véhicule et/ou à l'avant du véhicule et/ou sur les rétroviseurs latéraux (42) d'un véhicule automobile (04).

7. Phare de véhicule automobile selon la revendication 5, ledit phare de véhicule automobile (01) étant réalisé en tant que feu de jour prévu à l'avant d'un véhicule automobile (04) et/ou en tant que phare remplissant au moins une fonction de feu de croisement et/ou en tant que phare antibrouillard et/ou en tant que feu de virage intégré par exemple dans un phare antibrouillard et/ou mis en œuvre par le biais d'un feu de brouillard.

8. Phare de véhicule automobile selon la revendication 5, ledit phare de véhicule automobile (01) étant réalisé en tant que feu arrière, ledit feu arrière comprenant des moyens de renvoi de la WUVL vers l'avant dans le sens de la marche (03), lesquels dévient la WUVL vers l'avant/le côté.

9. Phare de véhicule automobile selon l'une quelconque des revendications précédentes, la source lumineuse (02) prévue pour générer la WUVL étant une partie d'un moyen d'éclairage prévu pour remplir une autre fonction lumineuse dudit phare de véhicule automobile (01), lequel moyen d'éclairage présente au moins deux sources lumineuses (02, 20) de couleurs de source lumineuse différentes, au moins une première source lumineuse (02) qui diffuse de la lumière pour générer la WUVL ainsi qu'au moins une deuxième source lumineuse (20) d'une couleur de source lumineuse destinée à remplir l'autre fonction lumineuse du phare de véhicule automobile (01).

10. Phare de véhicule automobile selon la revendication 9, les sources lumineuses (02, 20) diffusant de la lumière de différentes couleurs de sources lumineuses pouvant être mises en œuvre indépendamment l'une de l'autre.

11. Phare de véhicule automobile selon l'une quelconque des revendications précédentes, un ou plusieurs éléments optiques concourant à former une frontière entre la luminosité et l'obscurité et destinés à dévier la lumière étant associés à au moins une source lumineuse (02) prévue pour générer la WUVL.
